# EUROPÄISCHE PATENTSCHRIFT

(11) **EP 3 329 254 B1**
(45) Veröffentlichungstag und Bekanntmachung des Hinweises auf die Patenterteilung: **16.09.2020**
(21) Anmeldenummer: 17705398.0
(22) Anmeldetag: 15.02.2017
(51) Int. Cl.: G01N 21/85, G01N 21/3581, B07C 5/344, B07C 5/36, G01N 33/44, G01N 21/84

(54) **VORRICHTUNG UND VERFAHREN ZUR ANALYSE VON MATERIALIEN IN EINEM MATERIALSTROM SOWIE SORTIERANORDNUNG**
DEVICE AND METHOD FOR ANALYSING MATERIALS IN A MATERIAL FLOW AND SORTING DEVICE
DISPOSITIF ET PROCÉDÉ POUR ANALYSER DES MATÉRIAUX DANS UN FLUX DE MATIÈRE ET SYSTÈME DE TRI

(30) Priorität: 18.02.2016 DE 102016202530
(43) Veröffentlichungstag der Anmeldung: 06.06.2018
(73) Patentinhaber: Fraunhofer-Gesellschaft zur Förderung der angewandten Forschung e.V., 80686 München (DE)
(72) Erfinder: LÄNGLE, Thomas, 76344 Eggenstein (DE); GRUNA, Robin, 76530 Baden-Baden (DE); NÜSSLER, Dirk, 53590 Vettelschoß (DE); KÜTER, Andries, 53123 Bonn (DE); KIENINGER, Michael, 80679 Köln (DE); BRANDT, Christian, 53757 St. Augustin (DE)
(74) Vertreter: Pfenning, Meinig & Partner mbB
(86) Internationale Anmeldenummer: PCT/EP2017/053405
(87) Internationale Veröffentlichungsnummer: WO 2017/140729

(56) Entgegenhaltungen:
- EP-A1- 2 887 056
- US-A1- 2013 141 115
- US-A1- 2014 367 316
- DIRK NUESSLER ET AL: "THz Imaging for Recycling of Black Plastics", MICROWAVE CONFERENCE (GEMIC), 24. März 2014 (2014-03-24), Seiten 1-4, XP055362814, Germany ISBN: 978-3-8007-3585-3
- Dirk Nüßler ET AL: "High frequency line cameras for sorting applications", , 2015, Seiten 1-43, XP055362810, Gefunden im Internet: URL:http://spectronet.de/story_docs/vortra ege_2015/150318_ocm/150319_04_nuessler_fra unhofer_fhr.pdf [gefunden am 2017-04-07]

## Beschreibung

Die vorliegende Erfindung bezieht sich auf eine Vorrichtung sowie ein Verfahren zur Analyse von Materialien (insbesondere: Kunststoffabfallteile) in einem Materialstrom (insbesondere: einem Abfallstrom in Schüttgutform). Ebenso bezieht sich die Erfindung auf eine entsprechende Sortieranordnung.

Im Rahmen des Recycling von Kunststoffabfällen besteht die Notwendigkeit, die Abfälle möglichst sortenrein zu sortieren. Hierbei hängt der Wert des Recyklats im Wesentlichen von dem erreichten Reinheitsgrad ab. Ist der Reinheitsgrad zu niedrig, werden also z.B. nur 97% erreicht, können nur minderwertigere Produkte aus dem recycelten Material produziert werden. Somit kommt es zu einem sog. Downgrade im Recyclingprozess. Gemäß des Standes der Technik kommen im Wesentlichen mechanische, elektrische und optische Trennsysteme zum Einsatz. Insbesondere Hyperspektralkameras im kurzwelligen Infrarot (1000 bis 2500 nm) werden hier sehr erfolgreich eingesetzt. Jedoch entstehen Probleme, wenn schwarze Kunststoffe bzw. mehrschichtige Kunststoffe sortiert werden müssen. Bei schwarzen Kunststoffen ist der reflektierte Anteil des zu verwertenden Lichtspektrums zu gering (bzw. die Materialabsorption zu hoch), um eine sichere Klassifikation zu erreichen. Ursache hierfür sind die für die Schwarzfärbung zugemischten Kohlestoffverbindungen, i. d. R. Ruß. Zudem findet hierdurch nur eine reine Prüfung an der Oberfläche statt und andere Kunststoffe in darunterliegenden Schichten, z. B. bei Mehrschicht-Materialien und -Gegenstände, werden nicht korrekt klassifiziert. In Frage kommen somit nur Verfahren, bei denen in einer Transmissionsanordnung auch unter der Oberfläche befindliche Strukturen sichtbar gemacht werden können. Aktuell können dieses Röntgensysteme sein, die aufgrund ihrer ionisierenden Strahlung nur schwer eingesetzt werden können, sowie THz-Spektrometer (vgl. z.B. US 2014/0367316 A1), die aufgrund ihrer Messgeschwindigkeit und ihres Systempreises nicht in Frage kommen.

Der Artikel von DIRK NUESSLER ET AL: "THz Imaging for Recycling of Black Plastics", MICROWAVE CONFERENCE (GEMIC), 24. März 2014 (2014-03-24), Seiten 1-4, VDE Verlag GmbH, Germany, ISBN: 978-3-8007-3585-3 beschreibt eine Vorrichtung zur Analyse von Materialien in einem Materialstrom mittels THz-Strahlung in einer Transmissionsanordnung, wobei ein 12 GHz breites Frequenzband von 84 GHz bis 96 GHz verwendet wird, das 128 schmale Einzelspektren enthält. Die Vorrichtung umfasst außerdem ein Aufnahmesystem zum optischen Abtasten des Materialstroms.

Zudem ist die thermische Verwertung der schwarzen Kunstoffe bekannt, bei der durch Verbrennung des Kunststoffs Energie gewonnen wird. Bei nichtschwarzen Kunststoffen wird nach der Sortierung das Recyklat chemisch und physikalisch getestet und wenn der Reinheitsgrad bzw. die physikalischen Eigenschaften nicht ausreichend sind, das recycelte Material mit frisch produziertem, neuen Material gemischt, um ein höherwertiges Ausgangsmaterial zu realisieren. Chemische Trennverfahren werden aktuell untersucht, sind aber noch nicht für Großanlagen geeignet.

Aufgabe der vorliegenden Erfindung ist es somit, Vorrichtungen und Verfahren zur Verfügung zu stellen, die zur Analyse, insbesondere zur Sortierung, von Materialien in einem Materialstrom dienen. Dabei sollen insbesondere als Materialien auch schwarze Kunststoffe (auch: mehrschichtige schwarze Kunststoffe) mit hoher Genauigkeit und Zuverlässigkeit analysierbar und somit auch sortierbar sein. Zudem soll eine entsprechende Sortieranlage zur Verfügung gestellt werden.

Die Lösung ergibt sich aus Anspruch 1 (Vorrichtung) sowie Anspruch 15 (Sortieranordnung). Ein erfindungsgemäßes Verfahren ist dadurch gekennzeichnet, dass die Materialien in einem Materialstrom in einer erfindungsgemäßen Vorrichtung (bzw. einer erfindungsgemäßen Sortieranlage) analysiert (und ggfs. auch sortiert) werden.

Vorteilhafte Ausführungsvarianten lassen sich den abhängigen Ansprüchen entnehmen. Dabei können Merkmale eines beliebigen abhängigen Anspruchs auf beliebige Art und Weise (gemäß der Anspruchsstruktur) mit Merkmalen eines oder mehrerer anderen/r abhängigen/r Anspruchs/Ansprüche kombiniert werden.

Eine erfindungsgemäße Vorrichtung ist Anspruch 1 zu entnehmen.

Die mehreren unterschiedlichen THz-Frequenzbänder sind erfindungsgemäß sich nicht überlappende, voneinander beabstandete Frequenzbänder mit einer Bandbreite von jeweils zwischen 8 GHz und 48 GHz.

Beim Materialstrom kann es sich insbesondere um einen Schüttgutstrom, der eine Vielzahl einzelner Materialproben umfasst, handeln. Das Schüttgut ist insbesondere Kunststoffabfall, die Materialproben sind somit in der Regel eine Vielzahl verschiedener Kunststoffabfallteile (nachfolgend alternativ auch als "Flakes" bezeichnet). Insbesondere sind die Materialproben bzw. Flakes schwarze bzw. schwarzgefärbte Kunststoffteile aus unterschiedlichen Kunststoffmaterialien, ggfs. auch mehrschichtige Kunststoffteile. Diese Materialproben (Kunststoffabfallteile) sind erfindungsgemäß zu analysieren, insbesondere auch zum Zwecke sortenreiner Trennung unterschiedlicher Kunststoffmaterialien zu sortieren.

Die Analyse, insbesondere das Auswerten der durch die Transmissionsanordnung erhaltenen Transmissionsinformationen und der durch das Aufnahmesystem erhaltenen Abtastinformationen, kann in einer gemeinsamen Auswerteeinheit (Recheneinheit, z.B. PC) der Vorrichtung durchgeführt werden. Die Auswerteeinheit kann dabei sowohl Teile der Transmissionsanordnung als auch Teile des Aufnahmesystems umfassen. Teile der Vorrichtung, die dem Erfassen und Auswerten der THz-Frequenzbänder bzw. der Einzelspektren dienen, können (ob räumlich getrennt von der Transmissionsanordnung ausgebildet oder nicht) als Teile der Transmissionsanordnung angesehen werden.

Ebenso können Teile der Vorrichtung, die dem optischen Abtasten (oder darauf aufbauenden Datenauswerteschritten) dienen, ob räumlich getrennt vom

Aufnahmesystem ausgebildet oder nicht, als Teile des Aufnahmesystems angesehen werden.

Die mit der Transmissionsanordnung gewonnenen Transmissionsinformationen sind Informationen (in der Regel in Form digitaler Daten - Entsprechendes gilt für die Abtastinformationen), die beim Auswerten der THz-Strahlungsanteile, also insbesondere der THz-Frequenzbänder und/oder der Einzelspektren in diesen THz-Frequenzbändern, gewonnen werden.

Die Transmissionsanordnung kann zum Erfassen der THz-Strahlungsanteile eine in der Regel orts- und zeitauflösende Hochfrequenz-Kamera, insbesondere eine ein- oder mehrzeilige Hochfrequenz-Zeilenkamera (oder auch eine Flächenkamera), die im THz-Spektralbereich empfindlich ist, umfassen. Die Transmissionsanordnung kann zum Erzeugen derTHz-Strahlung bzw. der THz-Frequenzbänder einen THz-Beleuchter umfassen. THz-Strahlung (also Terahertz-Strahlung) ist erfindungsgemäß definiert als elektromagnetische Strahlung mit einer Wellenlänge zwischen dem Infrarotbereich und dem Mikrowellenbereich. Erfindungsgemäß liegt die verwendete Terahertz-Strahlung vorzugsweise zwischen 10 Gigahertz (GHz) und 10 THz, bevorzugt zwischen 30 GHz und 1 THz.

Das optische Abtasten erfolgt erfindungsgemäß mit einer Wellenlänge außerhalb des Terahertz-Bereichs. Vorzugsweise wird im sichtbaren Bereich (380 nm bis 780 nm) abgetastet. Alternativ (oder auch zusätzlich) kann auch im Infrarotbereich (780 nm bis 1 mm) und/oder im Ultraviolett-Bereich (100 nm bis 380 nm) abgetastet werden. Insbesondere erfolgt dabei ein optisches Abbilden mit Hilfe einer in der Regel orts- und zeitauflösenden Kamera, insbesondere einer RGB-Kamera oder auch einer monochromatischen Kamera (bevorzugt auf CCD- oder CMOS-Basis). Als Kamera kann eine ein- oder mehrzeilige Zeilenkamera oder auch eine Flächenkamera (Array-Kamera) eingesetzt werden.

Das Aufnahmesystem kann die Oberfläche des Materialstroms, also die Oberflächen der einzelnen Materialproben darin, von einer Seite abbilden. Es ist jedoch auch möglich, optisch von zwei gegenüberliegenden Seiten abzutasten (Entsprechendes gilt für das Abtasten durch die Transmissionsanordnung). Ziel ist dabei, zumindest näherungsweise die Geometrie oder Aspekte derselben (insbesondere: die Materialdicke) der einzelnen Proben bzw. Flakes im Materialstrom zu bestimmen. Das Aufnahmesystem kann dazu insbesondere auch einen optischen 3D-Sensor (dreidimensionale Messtechnik) umfassen. Insbesondere kann im Aufnahmesystem ein Laserlinienscanner verwendet werden, mit dem beispielsweise die Materialdicke der Flakes in Einstrahlrichtung der THz-Strahlung erfasst werden kann. Bevorzugte Laserwellenlängen sind 405 nm, 658 nm oder 532 nm.

Die Transmissionsanordnung nutzt erfindungsgemäß einen hyperspektralen Ansatz mit mehreren kleinen Frequenzbändern (also Frequenzbändern geringer Bandbreite) im THz-Bereich im Gegensatz zu einer breitbandigen Abtastung bei spektroskopischen THz-Systemen aus dem Stand der Technik (die über nahezu den gesamten THz-Bereich bzw. über ein THz-Band mit großer Bandbreite von deutlich über 100 GHz arbeiten).

Die Anzahl der mehreren THz-Frequenzbänder ist erfindungsgemäß in der Regel deutlich kleiner, bevorzugt um mindestens den Faktor 16 kleiner, bevorzugt um mindestens den Faktor 32 kleiner, als die Anzahl ("Vielzahl") von Einzelspektren in jedem dieser THz-Frequenzbänder. Im Frequenzraum gesprochen ist die Bandbreite der schmalen (bevorzugt nahezu linienförmigen) Einzelspektren erfindungsgemäß in der Regel sehr viel kleiner, bevorzugt um den Faktor 10³ kleiner, bevorzugt um den Faktor 10⁴ kleiner, bevorzugt um den Faktor 10⁵ kleiner, bevorzugt um den Faktor 10⁶ kleiner, als die geringe bzw. kleine Bandbreite der THz-Frequenzbänder. Beispielsweise kann die Bandbreite jedes der Einzelspektren einige 100 Hz bis einige kHz bei einer Bandbreite der THz-Frequenzbänder zwischen 8 und 48 GHz betragen. Dabei ist vorteilhaft, die Bandbreite so klein zu wählen, dass die dispersiven Effekte vernachlässigt werden können, dass also die Veränderung der Materialkonstanten über die Frequenz vernachlässigt werden kann. Es ist vorteilhaft, die Variation der Materialkonstanten im betrachteten Frequenzband unter 2 %, bevorzugt unter 1 % zu halten. Näherungsweise kann man bei den meisten Kunststoffen die Bandbreite auf 5 % bis 10 % der Mittenfrequenz begrenzen. Siehe auch die abhängigen Ansprüche sowie die nachfolgenden Beschreibungsteile. Die einzelnen, sich jeweils nicht überlappenden THz-Frequenzbänder haben (jeweils bezogen auf unmittelbar benachbarte Bänder) vorzugsweise einen Mindestabstand. Aus technischer Sicht ist es vorteilhaft, die ganzzahligen Vielfachen der Mittenfrequenz bezogen auf die kleinste Mittenfrequenz zu verwenden, z.B. die zweiten, dritten und vierten. Beispielhaft nehmen wir an, das unterste Frequenzband hätte eine Mittenfrequenz von 100 GHz mit 1 GHz Bandbreite, dann würde das nächste Frequenzband bei 200 GHz realisiert usw. Alternativ kann man ein festes Raster verwenden, z. B. 10 mal die Bandbreite des unteren Frequenzbandes. Bewährt hat sich eine Ableitung über die Veränderung der Materialkonstanten. Betrachtet man die Dielektrizitätskonstante, dann kann die Mittenfrequenz des zweiten Frequenzbandes auf diejenige Frequenz gelegt werden, bei der sich die Dielektrizitätskonstante um mindestens 0.1 bzw. 5 % bis 10 % ihres Wertes verändert hat.

Alternativ zum Begriff des Einzelspektrums wird nachfolgend der Begriff der Frequenzlinie verwendet.

Vorteilhafterweise realisierbare Merkmale beschreibt Anspruch 2.

Weitere vorteilhafterweise realisierbare Merkmale beschreibt Anspruch 3.

Ein Beispiel gemäß dieser beiden Ansprüche ist wie folgt: Die Transmissionsanordnung erzeugt, erfasst und wertet aus vier Frequenzbänder mit Mittenfrequenzen bei 60, 120, 240 und 360 GHz (beispielsweise abgeleitet gemäß einer Frequenzerweiterung von einem einzigen Basisband, also von demselben Basisradar bei 30 GHz). Die vier Frequenzbänder werden mit der geringen Bandbreite von jeweils 16 GHz erzeugt. In jedem Frequenzband werden jeweils 128 schmale Einzelspektren erfasst und ausgewertet. Dabei hat jedes dieser insgesamt 512 Einzelspektren eine Restbandbreite von etwa 100 Hz (theoretisch wäre eine Breite von 1 Hz ideal, dies lässt sich aber praktisch nicht realisieren). Diese Restbandbreite der Frequenzlinien lässt sich beispielsweise über die volle Breite bei halbem Maximalwert der Intensität innerhalb der jeweiligen Frequenzlinie definieren. Die minimale Anzahl der Frequenzlinien bei einer gleichmäßigen Verteilung über das Frequenzband kann sich an dem Nyquist-Kriterium orientieren. Es kann erfolgen auf Basis der dünnsten zulässigen Materialstärke und der niedrigsten Permittivität sowie einer Abschätzung über den minimalen Abstand, den ein Maximum und ein Minimum des durch Interferenzen entstehenden Rippels haben. In dieser Frequenzbandbreite sollten vorzugsweise mindestens zwei Frequenzlinien liegen. Diese Methodik kann auch herangezogen werden, um die minimale Bandbreite zu bestimmen, wenn man beispielhaft die Forderung aufstellt, dass mindestens ein oder zwei Minima-Maxima-Durchläufe bei einer ungünstigen Materialprobe vorliegen müssen.

Weitere vorteilhafterweise realisierbare Merkmale beschreibt Anspruch 4.

Dabei können insbesondere die THz-Frequenzbänder vom selben Referenzoszillator (z.B. Quarz) als Frequenzerzeuger mittels Frequenzerweiterung(en) abgeleitet werden. Die Vorgehensweise diesbezüglich ist dem Fachmann bekannt.

Weitere vorteilhafterweise realisierbare Merkmale beschreiben die Ansprüche 5 bis 8.

Gemäß dieser Ansprüche kann das Bestimmen bzw. das Berechnen in einer/der Auswerteeinheit der Vorrichtung, insbesondere in einer Recheneinheit (z.B. PC) der Vorrichtung, mittels geeigneter Auswerteprogramme (Software) durchgeführt werden. Damit erfolgt die erfindungsgemäße Analyse vorzugsweise computergestützt.

Weitere erfindungsgemäß realisierbare Merkmale zeigen die Ansprüche 9 und 10.

Gemäß des letztgenannten Anspruchs kann der weitere Materialstrom entweder ein kontinuierlicher Materialstrom sein, für dessen Materialien bereits Permittivitäten bzw. permittivitätsbezogene Informationen bestimmt und abgespeichert wurden (also entgegen der Transportrichtung gesehen weiter vorne im Strom die Materialproben abgetastet wurden) oder ein anderer Materialstrom, der die Vorrichtung zur Analyse zu einem späteren Zeitpunkt durchläuft. Somit sind noch unbekannte Materialien in Echtzeit bestimmbar oder identifizierbar, indem für diese aufgenommene Permittivitäten (bzw. aufgenommene permittivitätsbezogene Informationen) mit bereits hinterlegten Permittivitäten bzw. permittivitätsbezogenen Informationen bekannter Materialien verglichen werden (also mit charakteristischen Fingerabdrücken, nachfolgend auch als "Fingerprints" bezeichnet, der bekannten Materialien verglichen werden).

Weitere vorteilhafterweise realisierbare Merkmale lassen sich Anspruch 11 entnehmen.

Dabei haben, aufgrund der Wellenlänge der jeweils verwendeten elektromagnetischen Strahlung, die mittels der Transmissionsanordnung gewonnenen Transmissionsbilder eine sehr viel geringere Auflösung (etwa um den Faktor 30 bis 40), als die mit dem Aufnahmesystem gewonnenen Aufnahmebilder. Keine-Materialien-abbildenden Pixel der Transmissionsbilder (bzw. der Aufnahmebilder) zeigen in der Regel einen leeren Bildhintergrund von Lücken zwischen einzelnen Materialproben bzw. Flakes des Materialstroms (zeigen also beispielsweise Oberflächenabschnitte eines Förderbands der Vorrichtung, auf dem der Materialstrom kontinuierlich unterhalb der Transmissionsanordnung und unterhalb des Aufnahmesystems hinweg transportiert wird). Durch geeignete, dem Fachmann grundsätzlich bekannte Bildverarbeitungsalgorithmen (z.B. zur Kantendetektion) sind die materialabbildenden und die nichtmaterialabbildenden Pixel der Aufnahmebilder (und damit vermittels der geometrischen Registrierung auch der Transmissionsbilder) voneinander unterscheidbar.

Die vorangehend beschriebene Registrierung und die dieser zum zuvor genannten Zweck nachfolgenden Schritte sind beispielsweise in der Auswerteeinheit der Vorrichtung mittels geeigneter Software-Programme (Auswerteprogramme) durchführbar.

Weitere vorteilhafterweise realisierbare Merkmale beschreibt Anspruch 12.

Dabei ermöglicht insbesondere der Einsatz des Laserlinienscanners ein optisches Höhenlinienprofil an den einzelnen Materialproben bzw. Flakes als Teil der Abtastinformationen zu bestimmen und beispielsweise zur Dickenbestimmung an den Materialien heranzuziehen. Die Kameras können CCD- oder CMOS-basiert arbeiten.

Weitere vorteilhafterweise realisierbare Merkmale beschreibt Anspruch 13.

Somit können die einzelnen Materialproben/Flakes optisch in 3D vermessen werden und es können vollständige dreidimensionale (3D) Oberflächenmodelle der einzelnen Materialproben generiert werden. Die Modelle können dazu herangezogen werden, geometrische Parameter der Materialproben, insbesondere ihre Materialstärke bzw. -dicke in Einstrahlrichtung der Transmissionsanordnung, zu bestimmen.

Weitere vorteilhafterweise realisierbare Merkmale beschreibt Anspruch 14.

Somit kann eine 3D-Vermessung der Materialproben/Flakes auch im THz-Wellenlängenbereich (also nicht nur beim optischen Abtasten) durchgeführt werden. Neben den Transmissionsinformationen und den Abtastinformationen können beim Durchführen der Analyse auch durch die Reflexionsanordnung gewonnene Reflexionsinformationen verwendet werden.

Eine erfindungsgemäße Sortieranordnung beschreibt Anspruch 15.

Falls bei dieser Sortieranordnung die Reflexionsanordnung vorhanden ist, ist die Aussortiereinrichtung, in Transportrichtung des Materialstroms in der Sortieranordnung gesehen, auch hinter der Reflexionsanordnung positioniert.

Vor den nachfolgenden Ausführungsbeispielen wird nun zunächst allgemein beschrieben, wie die vorliegende Erfindung vorteilhafterweise ausgeführt werden kann.

Um den Materialstrom zu analysieren, wird eine Hochfrequenzzeilenkamera im THz-Spektralbereich verwendet. Spektroskopische THz-Systeme, die eingesetzt werden, um Kunststoffe zu charakterisieren, verwenden ein breitbandiges Verhalten, um die Veränderung der Materialeigenschaften über den Frequenzbereich auszunutzen. Die relative Permittivität des Materials ist im Allgemeinen komplexwertig. Genauso wie bei elektromagnetischen Gleichfeldern bilden sich auch bei Wechselfeldern in Dielektrika Polarisationsfelder, die der angelegten äußeren Feldgröße um einen Phasenwinkel nacheilen. Dabei bleibt die Orientierung der Ladungsträger im Dielektrikum in der Phase (zeitlich) hinter der Umpolarisierung des angelegten Wechselfeldes zurück. Mit zunehmender Frequenz wird dieser Effekt stärker. Insoweit ist Permittivität in den verschiedenen Frequenzbändern nicht konstant und das Frequenzverhalten der Permittivität kann als Klassifizierungsmerkmal verwendet werden.

Um und die für Inline-Anwendungen (Sortieranlagen) notwendigen Messgeschwindigkeiten zu erreichen, werden folgende Innovationen durch die vorliegende Erfindung eingeführt: Die Hochfrequenzkamera nutzt mehrere kleinere Frequenzbänder. Wichtig ist dabei, dass nicht wie bei der sonst üblichen THz-Spektroskopie der komplette Frequenzbereich abdeckt wird, sondern die Kamera besitzt mehrere Frequenzaufsätze, die, vergleichbar einem Farbfilter in optischen Systemen, nur einen Teilbereich des Frequenzspektrums abdecken. Diese können in Halbleitertechnik deutlich günstiger aufgebaut werden und ihren kleineren Frequenzbereich schnell genug für Inline-Anwendungen abtasten. Statt einer einzelnen Frequenzrampe über den kompletten Frequenzbereich, werden jetzt mehrere kleinere Frequenzrampen parallel verwendet, um einen ausreichend hohe Messgeschwindigkeit zu realisieren.

Betrachtet man das Dämpfungsverhalten über den Frequenzbereich, kann dieses für eine erste Auswertung herangezogen werden. Da die Unterschiede zwischen den Kunststoffen wie bei PP und PE jedoch relativ klein sind, ist es sinnvoller, die Phaseninformation bzw. die Laufzeitverzögerung des Signals im Material mit in die Auswertung einzubeziehen. Im Gegensatz zur Dämpfung, die mit höherer Materialstärke kontinuierlich ansteigt, bewegt die Phase sich zyklisch zwischen 0° und 360°. Ohne Information über die Materialstärke ist die Phaseninformation nicht eindeutig und die Permittivität kann nicht bestimmt werden. Bei breitbandigen Systemen aus dem Stand der Technik kann die Materialstärke über die Zeitantwort des Signals bestimmt werden. Misst man nun erfindungsgemäß nur einen kleinen Teilbereich, ist die Dickenabschätzung auf Basis des berechneten Zeitsignals nicht mehr genau genug für die notwendige Präzision bei der Berechnung der Materialstärke. Um dieses zu kompensieren, kombiniert man erfindungsgemäß die Hochfrequenzkamera mit einer optischen 3D-Messtechnik, zum Beispiel einem Laserlinienscanner, der die Materialstärke zur Auswertung beisteuert. Die Kombination der beiden Sensoren erlaubt in der Fusion die exakte Berechnung der Permittivität für das einzelne, kleine Frequenzband. Kombiniert man erfindungsgemäß mehrere auseinanderliegende kleine Frequenzbänder, kann der Frequenzverlauf der Permittivität über einen weiten Frequenzbereich exakt bestimmt werden. Neben dieser expliziten Schätzung der Permittivität aus den Frequenzverläufen sind auch Verfahren des Machine-Learnings direkt auf den gemessenen Absorptionsverläufern geeignet. Diese schätzen die Materialidentifikation direkt als eine Wahrscheinlichkeitsverteilung aus den Eingangsdaten. Nicht ausschließliche Beispiele hierfür sind alle Varianten der künstlichen neuronalen Netzwerke und Gaussian-Mixture-Models.

Um die Kosten eines Systems gering zu halten können die THz-Messungen bei möglichst niedrigen Frequenzen durchgeführt werden, da hier die Bauteilkosten niedrig sind. Die damit verbundenen größeren Wellenlängen können dazu führen, dass Streu- und Beugungseffekte das Messsignal verfälschen. So können konvex oder konkav gekrümmte Oberflächen das Signal streuen oder im Detektor bündeln. Um diese Effekte zu minimieren, wird die Geometrie des zu charakterisierenden Flakes aus dem Kunststoffrecycling mittels eines optischen Systems vermessen und in der Berechnung mit berücksichtigt. Durch die Fusion von hochaufgelöstem Bild und den gemessenen Hochfrequenzpixeln kann bestimmt werden, wie das zu vermessende Flake gerade im Footprint des Hochfrequenzpixel-Pixels liegt und ob es den Footprint vollständig oder nur teilweise ausfüllt. Ist diese Überdeckung aus dem günstigeren optischen Sensor bekannt, kann die Anzahl der wesentlich teureren Hochfrequenzpixel reduziert werden und die Gesamtkosten des Systems können weiter minimiert werden.

Üblicherweise werden die Frequenzbänder separat ausgewertet und dann die prozessierten Daten der einzelnen Frequenzbänder fusioniert. Für viele Analysemethoden wäre es aber dennoch von Vorteil, den kompletten Frequenzbereich zu prozessieren, um eine insgesamt höhere Bandbreite zur Verfügung zu haben. Dieses ist mit separaten, d.h. voneinander unabhängigen Hochfrequenzsensoren jedoch nicht möglich. Um dieses Problem zu lösen wurde erfindungsgemäß ein Multifrequenz-Frontend entwickelt. Backend und Signalaufbereitung werden von einer zentralen Unit zur Verfügung gestellt. Mittels Frequenzerweiterungen werden von diesem Basisband verschiedene Hochfrequenzbänder abgeleitet und ausgesendet. Im Gegensatz zu optischen Systemen bzw. Beleuchtern sind die Beleuchter/Sender im Hochfrequenzbereich kohärent zueinander, da sie sich von demselben Referenzoszillator ableiten.

Hierdurch können die verschiedenen Bänder kombiniert werden. Dieses erlaubt es, die Phasenverläufe der einzelnen Frequenzbänder untereinander in einen absoluten Bezug zu setzen und nicht wie sonst üblich nur in einen relativen Bezug. Die separat aufgesplitteten Einzelbänder werden über einen breitbandiges Leistungskombinierer-Netzwerk zusammengefasst, einer zentralen Optik zugeführt und abgestrahlt. Im Empfangsfall werden die verschiedenen Frequenzbänder erfasst und über ein Verteilnetzwerk wieder zerlegt und separat in Zwischenbänder heruntergemischt.

Die Erfindung beschreibt somit eine Fusion einer 3D-Messtechnik mit Hochfrequenzsensoren, die nur über eine begrenzte Bandbreite verfügen, für Klassifizierungsaufgaben. Hierbei werden die durch die Begrenzung der Bandbreite fehlenden Informationen aus dem optischen 3D-Sensor abgeleitet. Es wurde eine günstige und schnelle Messtechnik für Sortierungsaufgaben realisiert. Es wird eine Multiband-Hochfrequenzkamera eingesetzt, die mehrere einzelne, auseinanderliegende Frequenzbänder kohärent miteinander verbindet, um eine bandübergreifende Signalverarbeitung zu realisieren. Damit lassen sich die Kosten reduzieren und die Geschwindigkeit lässt sich erhöhen.

Durch den Aufbau eines in mehrere kleinere Frequenzbänder zerlegten Systems kommt es zu einer Kostenreduktion bei gleichzeitig höhere Scangeschwindigkeit und Performance. Die Kostenreduktion entsteht durch den Effekt, dass ein extrem breitbandiges System, welches sehr schnell die große Bandbreite abdecken muss, aufwändig und damit teuer ist. Das erfindungsgemäße System, das nur einen kleineren Bereich abdeckt, lässt sich deutlich günstiger aufbauen und ist einfacher für hohe Scanraten und sehr gute Linearität auszulegen. Dieses gilt dabei unabhängig von der Art der Frequenzrampenerzeugung, z. B. durch einen PLL-Kreis (Phasenregelschleife) oder auf Basis eines DDS-Systems (direkte digitale Synthese) mit Frequenzvervielfachern.

Die Erfindung lässt sich bevorzugt für die Sortierung von Schüttgutware, von Kunststoff (insbesondere auch schwarze Kunststoffe) oder von Keramikprodukten einsetzen.

Nachfolgend wird die vorliegende Erfindung nun anhand mehrerer Ausführungsbeispiele erläutert. Dabei zeigen
- Figuren 1 bis 9 ein erstes Ausführungsbeispiel, anhand dessen auch Grundüberlegungen zur Vorgehensweise bei der vorliegenden Erfindung erläutert werden;
- Figur 10 ein zweites Ausführungsbeispiel;
- Figur 11 ein drittes Ausführungsbeispiel.

Werden in den Ausführungsbeispielen identische Bezugszeichen verwendet, so bezeichnen diese identische bzw. sich entsprechende Merkmale, die daher bei den Ausführungsbeispielen 2 und 3 nicht nochmal erläutert werden.

### Erstes Ausführungsbeispiel:

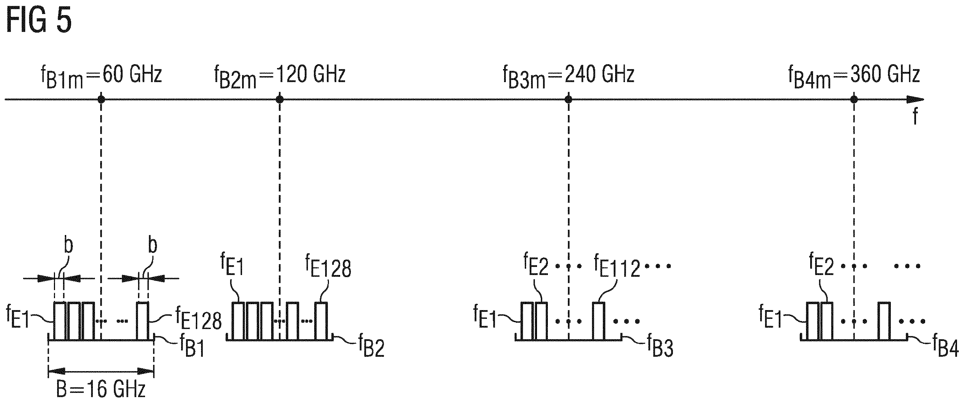

Das erste Ausführungsbeispiel beschreibt (vgl. zunächst Fig. 5) die Auswertung von 128 schmalen Einzelspektren f_{E} (bezeichnet mit f_{E1} bis f_{E128}) pro einzelnem Frequenzband geringer Bandbreite f_{B}, wobei insgesamt vier Frequenzbänder f_{B1} bis f_{B4} erzeugt, erfasst und ausgewertet werden (hyperspektrale Lösung). Die vier Frequenzbänder f_{B} liegen mit ihrer gesamten Bandbreite im Bereich zwischen 10 GHz und 1 THz und weisen die vier Mittenfrequenzen F_{BXm} (X = 1, ... , 4) von 60 GHz, 120 GHz, 240 GHz und 360 GHz auf. Die vier Frequenzbänder f_{B} haben jeweils eine Bandbreite von B = 16 GHz; innerhalb dieser 16 GHz Breite sind die 128 Frequenzlinien f_{E} jeweils in einem gleichmäßigen Raster über das zu kontrollierende Frequenzband verteilt (eine solche gleichmäßige Verteilung ist allerdings nicht notwendig).

Die theoretische Breite eines schmalen Einzelspektrums f_{E} beträgt im Idealfall 1Hz. Das Sendesignal, welches über den abzutastenden Frequenzbereich modelliert wird, wird kontrolliert. Technisch gesehen ist eine unendlich schmale Frequenznadel der Breite 1 Hz jedoch nicht realisierbar; auch wenn dies angestrebt wird, verbleibt aufgrund des Phasenjitters sowie der Empfangsfilter eine Restbandreite b im Hz bzw. KHz Bereich. Hier gilt b = 100 Hz.

Die Erfindung zeigt somit eine hyperspektrale Lösung, bei der hochaufgelöste Spektren in verschiedenen Frequenzbändern ausgewertet werden. Also im vorliegenden Beispiel jeweils 128 Einzelspektren pro Frequenzband. Die Frequenzbänder liegen überschneidungsfrei um die Mittenfrequenzen bei 60 GHz, 120 GHz, 240 GHz und 360GHz. Die Auswahl der Frequenzbänder ist dabei frei konfigurierbar und erfolgt entsprechend der Aufgabenstellung.

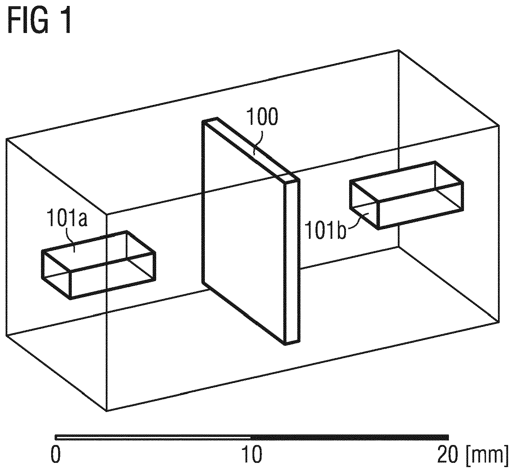

Um die Grundüberlegungen der Erfindung weiter zu verdeutlichen, seien nun die Figuren 1 bis 4 betrachtet.

Fig. 1 zeigt zwei offene Hohlleiter 101a und 101b, die sich gegenüberliegend angebracht werden. Zwischen diesen beiden Antennenstrukturen 101a, 101b wird eine Kunststoffplatte 100 eingebracht, deren Dicke (senkrecht zur Einstrahlungsrichtung bzw. Empfangsrichtung der beiden Antennenstrukturen 101a, 101b gesehen) und/oder deren Dielektrizitätskonstante variiert wird.

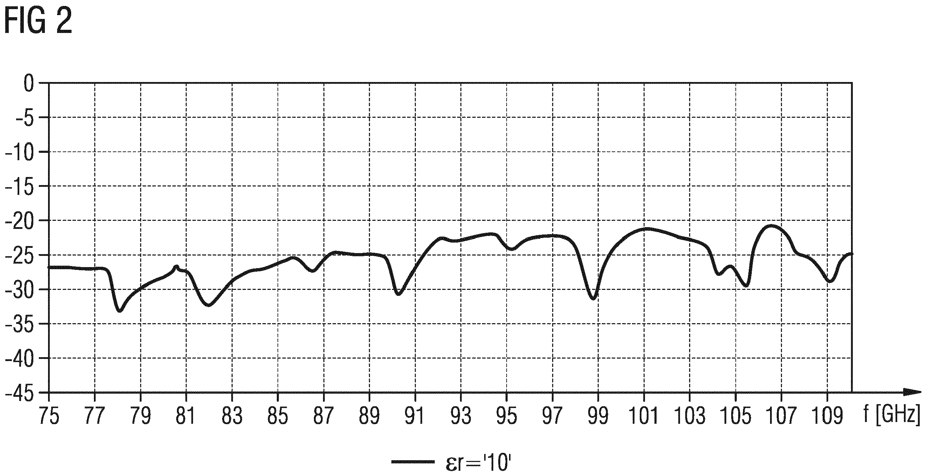

In einem nächsten Schritt regt man eine der Antennen an und variiert das THz-Signal über eine definierter Bandbreite. An den einzelnen Oberflächen der Platte 100 wird ein Teil des Signals reflektiert. Tritt eine elektromagnetische Welle durch ein Medium (Platte) wird sie durch das dielektrische Material abgeschwächt. Aufgrund der kohärenten Phasenerzeugung überlagern sich die reflektierten Signale entsprechend ihrer Phasenlage konstruktiv oder destruktiv. Die Unterschiede in der THz-Wellenlänge im Medium und im Freiraum (Vakuum bzw. Luft) führen dazu, dass sich bei einigen Frequenzen f die Signale positiv und bei einigen destruktiv überlagern, abhängig von der Materialstärke (Dicke) und den Materialkonstanten (insbesondere: Dielektrizitätskonstante εᵣ). Hierdurch entsteht ein charakteristischer Verlauf über den Frequenzbereich, hier zwischen 75 GHz und 110 GHz (Fig. 2 bis 4) dargestellt. Siehe zunächst Fig. 2.

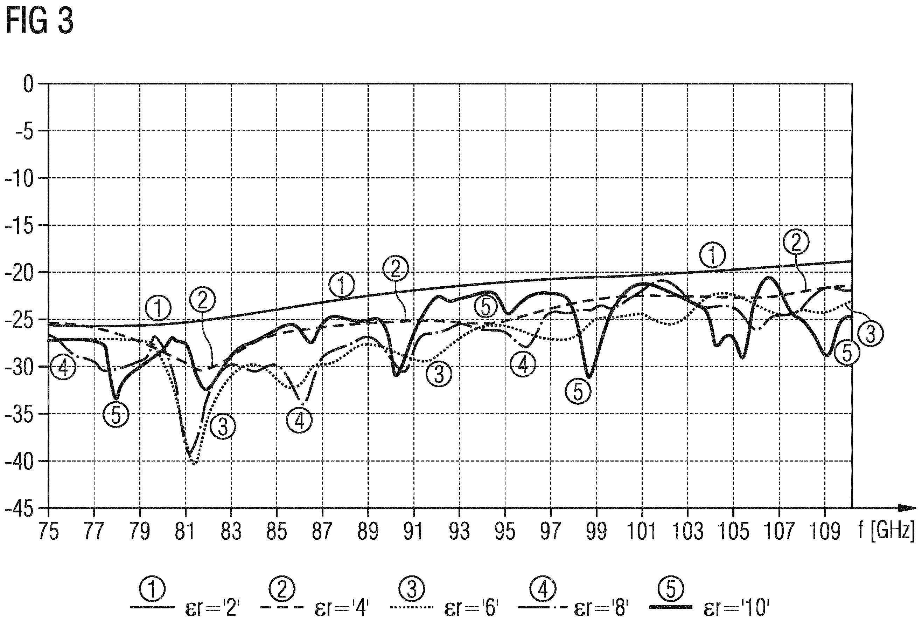

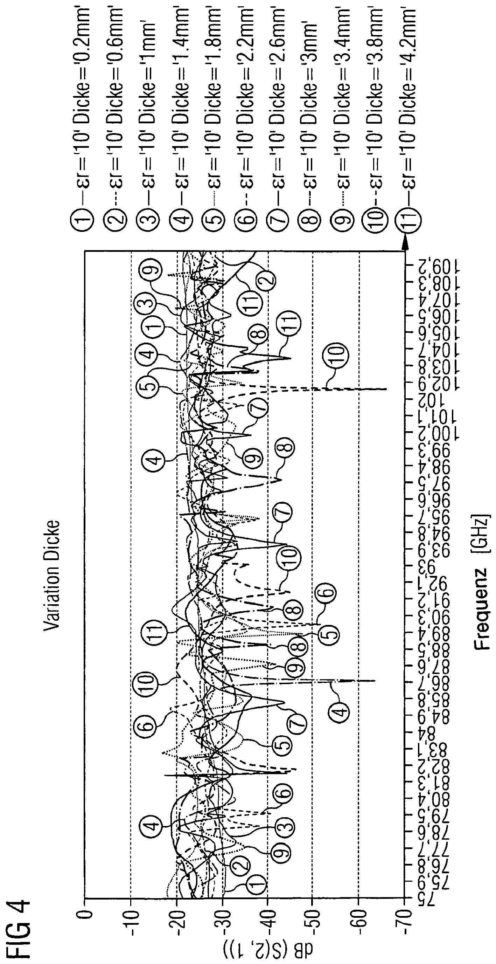

Der Verlauf variiert dabei bei konstanter Materialdicke über den Frequenzbereich f in Abhängigkeit von den dielektrischen Materialeigenschaften εᵣ der Platte 100. Vergleiche Figur 3. Oder wie in Fig. 4 dargestellt bei konstanten Materialeigenschaften (hier: εᵣ = 10) in Abhängigkeit von der Dicke der Platte 100.

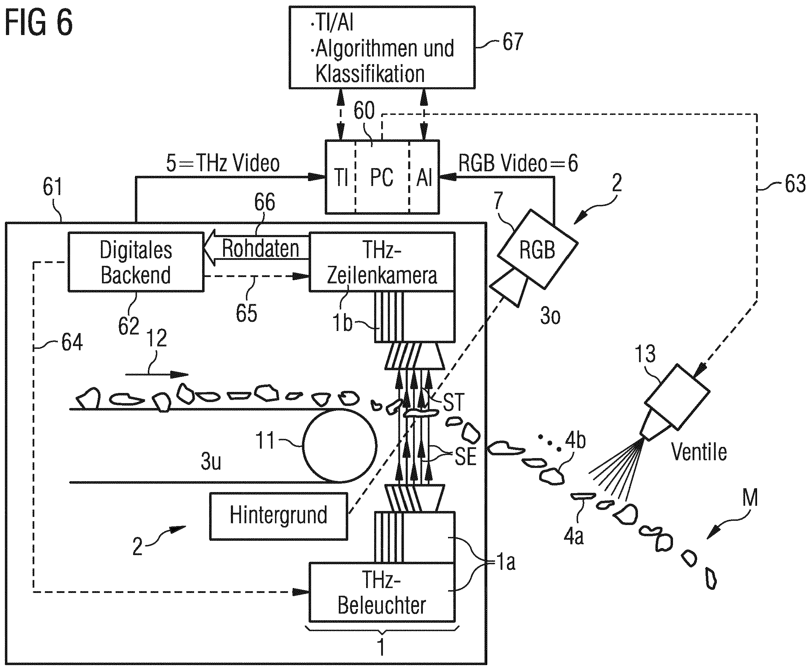

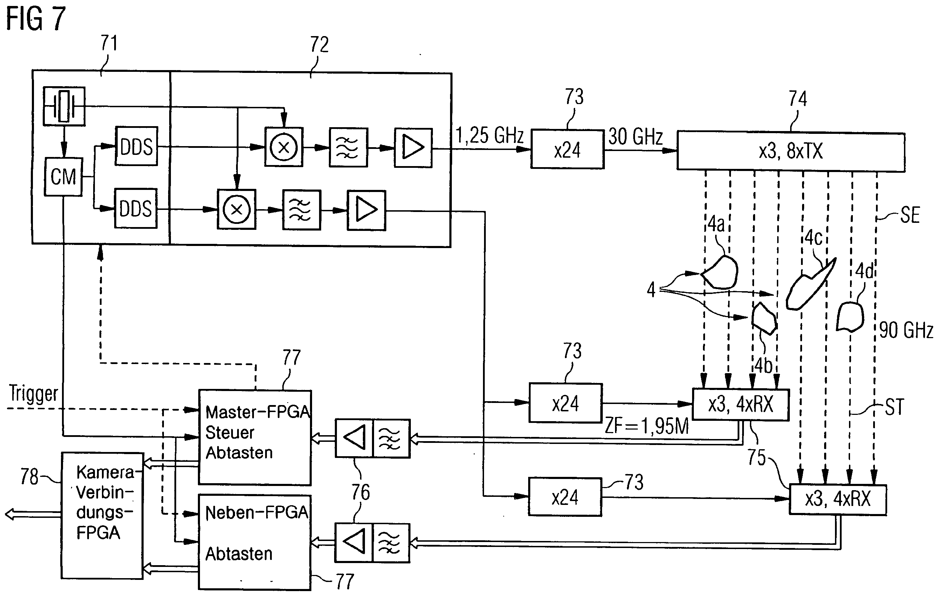

Bei realen Messungen im operativen System (vgl. z.B, Fig. 6) treten multiple Reflexionen auch zwischen Antennen oder zu vermessenden Flakes 4a, 4b, ... auf, die zu Interferenzen führen. Um diese zu beseitigen kann (klassischer Radaransatz), da es sich um einen kohärenten Sensor handelt (Ableiten der Mittenfrequenzen aus genau einem einzigen 30 GHz-Erzeuger, vgl. z.B. Fig. 7), eine Fourier-Transformation über die gemessenen komplexen Frequenzdaten durchgeführt werden. Hierdurch entsteht ein Entfernungsprofil vergleichbar der Aufnahme mit einem Zeitbereichsreflektometer. Im Zeitbereich können nun die multiplen Reflexionen größtenteils herausgefiltert werden, sofern die Entfernungsauflösung hoch genug ist (was eher große Radarbandbreiten voraussetzt). Gleichzeitig kann die (elektrische) Dicke des Materials gemessen werden. Nach einer inversen Fourier-Transformation erhält man den bereinigten Verlauf des Absorptionsspektrums und einen Phasenverlauf ohne den Einfluss multipler Reflexionen und kann aus diesen Informationen und der gemessenen (elektrischen) Dicke der Platte 100 die Materialkonstanten zurück schätzen. Diese Ansätze sind dem Fachmann grundsätzlich bekannt, vgl. z.B. "Broadband terahertz characterization of the refractive index and absorption of some important polymeric and organic electro-optic materials" von Paul D. Cunningham et al in Journal of Applied Physics 109, 043505 (2011); "Terahertz dielectric properties of polymers" von Yun-Sik Jin et al in Journal of the Korean Physical Society, Vol. 49, No. 2, August 2006, pp. 513-517; und "Terahertz time-domain spectroscopy for material characterization" von M. Naftaly und R. Miles in Proceedings of the IEEE, Vol. 95, No. 8, August 2007, pp.1658-1665. Siehe hierzu auch Figur 4.

Bei hohen Bandgeschwindigkeiten der erfindungsgemäßen Sortieranlagen (vgl. z.B. Figuren 6, 10 und 11) sind dabei sehr viele Fourier-Transformationen und komplexe Schätzverfahren in Echtzeit durchzuführen, was, um eine genügend hohe Entfernungsauflösung zu realisieren, eine recht große Messbandbreite erfordert. Durch den Einsatz von Maschinen Learning Algorithmen können Fingerprints im Frequenzraum für verschiedene Materialstärken und Materialparameter erstellt werden.

Figur 6 zeigt den prinzipiellen Aufbau der erfindungsgemäßen Vorrichtung zur Materialanalyse bzw. von einer eine solche Vorrichtung umfassenden erfindungsgemäßen Sortieranordnung gemäß des ersten Ausführungsbeispiels.

Die Transmissionsanordnung 1 dieses Beispiels umfasst einen THz-Beleuchter 1a, der von einer Seite (Unterseite 3u) THz-Strahlung SE auf den Materialstrom M einstrahlt. Diejenigen THz-Strahlungsanteile, die nicht im Materialstrom M bzw. dessen einzelnen Materialproben 4a, 4b, ... (Flakes) absorbiert werden und die auch nicht am Materialstrom M bzw. den Flakes 4a, 4b, ... desselben so reflektiert oder so gestreut werden, dass sie den Empfänger 1b nicht erreichen, also die durch den Materialstrom bzw. die Flakes 4a, 4b, ... hindurch transmittierten THz-Strahlungsanteile, die auf den Empfänger 1b (THz-Zeilenkamera) der Anordnung 1 einfallen, werden mit dem Bezugszeichen ST bezeichnet. Diese im Empfänger 1b nachgewiesenen THz-Strahlungsanteile ST werden nach ihrem Erfassen im Empfänger 1b zum Gewinnen von Transmissionsinformationen TI ausgewertet.

Auf der Unterseite 3u des Materialstroms M befinden sich das Förderband 11 zum Transport des Materialstroms M bzw. dessen Flakes und, in Transportrichtung 12 (die in Figur 6 von links nach rechts verläuft) gesehen hinter dem Band 11, der Abwurfbereich der Sortieranlage. In diesem Bereich bzw. im Bereich der Abwurfparabel des Materialstroms M (also in Fig. 6 gesehen rechts neben dem Förderbandende) geschieht das Erfassen der Flakes durch die Anordnung 1 sowie durch das System 2, vgl. nachfolgend.

Das Aufnahmesystem 2 umfasst eine Rot/Grün/Blau (RGB)-Videozeilenkamera 7 auf der der Unterseite 3u gegenüberliegenden Oberseite 3o des Materialstroms M (Seite 3o oberhalb des Materialstroms M). Des Weiteren ist auf der der Kamera 7 in Bezug auf den Materialstrom M gesehen gegenüberliegenden Unterseite 3u derjenige Hintergrund als Teil des Systems 2 skizziert, den die Kamerabilder bzw. Videobilder der Kamera 7 in Bildbereichen abbilden, in denen zum Zeitpunkt der jeweiligen Bildaufnahme gerade keine Flakes bzw. keine Materialien des Materialstroms M erfasst werden.

Schließlich ist in Transportrichtung 12 gesehen am Ende des Abwurfbereichs, also hinter dem Erfassungsbereich der Transmissionsanordnung 1 und dem Aufnahmebereich des Aufnahmesystems 2, eine Aussortiereinrichtung 13 in Form einer dem Fachmann bekannten Ausblaseinrichtung gezeigt. (Anhand der nachfolgend noch beschriebenen Informationsverarbeitung im Materialstrom M identifizierte, bestimmten Kriterien genügende Flakes 4 können durch Ventile der Ausblaseinrichtung 13 gezielt aus dem Materialstrom M entfernt werden und in einem oder mehreren Sammelabteil(en), das/die hier nicht gezeigt ist/sind, gesammelt werden. Die nicht aus dem Materialstrom M ausgeblasenen Flakes können in einem anderen, ebenfalls nicht gezeigten Sammelabteil gesammelt werden.)

Somit befinden sich auf der Unterseite 3u des Materialstroms M die Fördereinrichtung 11, der Hintergrund des Systems 2 sowie derTHz-Beleuchter 1a, wohingegen sich auf der der Seite 3u gegenüberliegenden Oberseite 3o des Materialstroms M die THz-Zeilenkamera 1b, die RGB-Kamera 7 und die Ausblasdüsen bzw. Ventile der Aussortiereinrichtung 13 befinden.

Figur 6 zeigt darüber hinaus folgende Merkmale betreffend die computergestützte Durchführung der Materialanalyse bzw. der Materialsortierung der Flakes 4a, 4b, ... im Materialstrom M.

Die THz-Sensorik 61 umfasst ein digitales Backend 62, mittels dessen sowohl eine Steuerung 64 des Beleuchters 1a als auch eine Steuerung 65 der THz-Zeilenkamera 1b erfolgt. Die mit der Zeilenkamera 1b aufgenommenen Rohdaten 66 werden dem digitalen Backend 62 übermittelt und dort zum THz-Video bzw. zu digitalen Transmissionsbildern 5 der Transmissionsanordnung 1 aufbereitet. Eine gemeinsame Auswerteeinheit der Transmissionsanordnung 1 sowie des Aufnahmesystems 2 ist in Form eines PC bzw. eines Serversystems 60 vorgesehen. Neben dem THz-Video 5 wird dieser Auswerteeinheit 60 auch das über die Kamera 7 aufgenommene RGB-Video 6 (bzw. werden die entsprechenden Aufnahmebilder 6 des Aufnahmesystems 2) übermittelt. Die Auswerteeinheit 60 umfasst einen Programmspeicher 67, in dem die zur Bearbeitung der Videos bzw. Bilder 5, 6, die zum Gewinnen der Transmissionsinformationen TI sowie der Abtastinformationen AI, die zur Materialanalyse verwendeten und die zur Sortierung und Klassifikation der einzelnen Flakes 4 eingesetzten Software-Programme bzw. Algorithmen abgelegt sind. Entsprechendes gilt für die Ablage aller zu speichernder Informationen bzw. Daten. Zudem steuert 63 die Auswerteeinheit 60 über geeignete Programme im Speicher 67 auch die Aussortiereinrichtung 13 auf Basis der Transmissionsinformationen TI und der Abtastinformationen AI bzw. der daraus gewonnenen Analyse- und Sortierinformationen.

In einer hier nicht gezeigten Variante des in Figur 6 gezeigten Aufbaus kann anstelle der RGB-Kamera 7 eine monochromatische Videokamera eingesetzt werden, bei ansonsten unverändertem Aufbau.

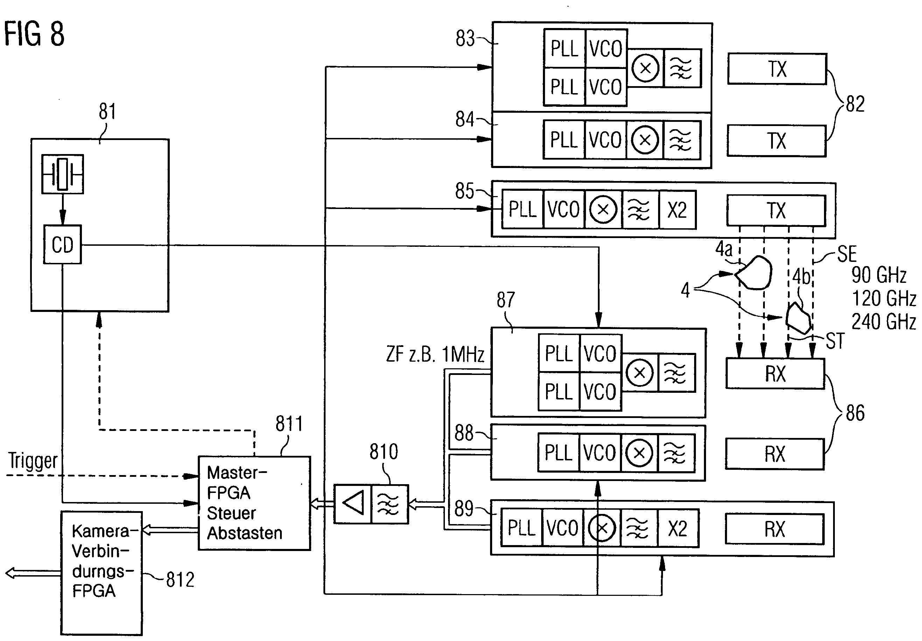

Figur 7 und Figur 8 skizzieren den prinzipiellen Aufbau der Transmissionsanordnung 1, also insbesondere die Erzeugung und Erfassung der mehreren unterschiedlichen THz-Frequenzbänder f_{B} vermittels des THz-Beleuchters 1a und der THz-Zeilenkamera 1b. 71 skizziert die Frequenzerzeugung, hier exemplarisch mit Quarz, mit dem Taktmanager bzw. dem "Configuration Management" CM sowie mit den direkten digitalen Synthesizern DDS. 72 zeigt die Basisfrequenzaufbereitung, hier exemplarisch mit Mischern, Bandpassfiltern und Verstärkern. 73 zeigt die Verteilungsfrequenzaufbereitung, hier exemplarisch mit Vervielfachern. 74 zeigt die Sendeeinheiten, hier exemplarisch mit Leistungsteilern, Leistungsschaltern und Antennen. 75 zeigt die Empfangseinheiten, hier exemplarisch mit Leistungsteilern und Empfangsantennen. 76 skizziert die Empfangsfilterung, hier exemplarisch mit Hochpassfiltern, Verstärkern und Dämpfungsgliedern. 77 skizziert das Mess-Backend, hier exemplarisch mit A/D-Wandlern, Tiefpassfiltern, FPGAs (feldprogrammierbaren Gate-Arrays) und Ethernet-Interfaces. 78 zeigt das Protkoll-Backend, hier exemplarisch mit einem FPGA, einem Ethernet-Interface und einem Kameraverbindungs-Interface (CameraLink). TX bezeichnet die Sender, RX die Empfänger.

In Figur 8 zeigt 81 die Referenzerzeugung, hier exemplarisch mit Quarz und Taktverteiler. 82 bezeichnet die Sendeantennen bzw. die Sender TX (vgl. Figur 7). 83 zeigt die Sendeseite für die Mittenfrequenz 90 GHz (hier mit monolithischer Mikrowellenschaltung für die Sendeseite, TX-MMIC), hier exemplarisch mit Phasenregelschleifen (phase locked loop, PLL), spannungsgesteuerten Oszillatoren (voltage-controlled oscillator, VCO), mit Mischer und mit Verstärker. 84 zeigt dies für die Mittenfrequenz 120 GHz, hier exemplarisch mit einem PLL, einem VCO, einem Mischer und einem Verstärker. 85 zeigt dies für die Mittenfrequenz 240 GHz, wobei zum Aufbau in 84 hier noch ein Frequenzverdoppler bzw. Frequenzvervielfacher X2 hinzukommt. 86 zeigt die Empfangsantennen mit Mischer. 87 zeigt auf der Empfangsseite für die Mittenfrequenz 90 GHz den empfangsseitigen MMIC, hier exemplarisch mit zwei PLL, zwei VCO, einem Mischer und einem Verstärker. 88 zeigt den empfangsseitigen MMIC für die Mittenfrequenz 120 GHz, hier mit einem PLL, einem VCO, einem Mischer und einem Verstärker. 89 zeigt den empfangsseitigen MMIC für die Mittenfrequenz 240 GHz, wobei dieser bis auf den hinzukommenden Vervielfacher (Frequenzverdopplung X2) im Aufbau dem MMIC 88 entspricht. 810 zeigt die Empfangsfilterung, hier exemplarisch mit Hochpassfilter, Verstärker und Dämpfungsglied. 811 zeigt das Mess-Backend, hier exemplarisch mit ADC, Tiefpassfilter, FPGA und Ethernet-Interface. 812 zeigt das Protokoll-Backend, hier exemplarisch mit FPGA, mit Ethernet-Interface und mit CameraLink-Interface.

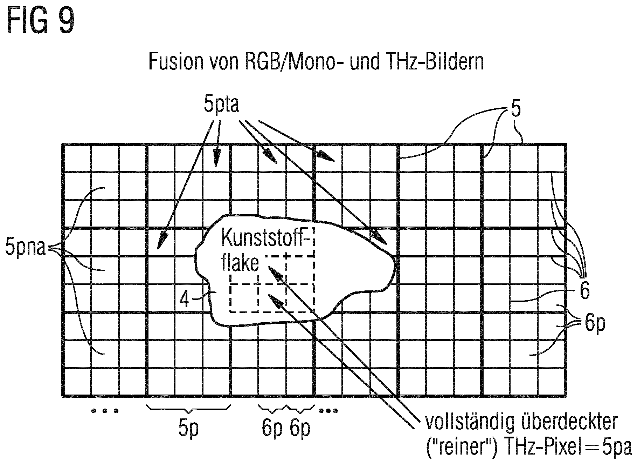

Figur 9 zeigt die erfindungsgemäße Fusion der mittels des hochauflösenden Aufnahmesystems 2 gewonnenen Aufnahmebilder 6 mit den mittels der Transmissionsanordnung 1 gewonnenen, deutlich niedriger aufgelösten Transmissionsbildern 5, also insbesondere die geometrische Registrierung der beiden Bildtypen 5, 6. Im gezeigten Beispiel ist vereinfacht angenommen, dass die Pixel 5p der THz-Transmissionsbilder 5 in jeder der beiden Dimensionen gesehen etwa dreimal so groß sind, wie die Pixel 6p der optischen Aufnahmebilder 6. In der dargestellten Fläche, also zweidimensional gesehen, überdecken somit 3 x 3 = 9 Pixel 6p exakt ein Pixel 5p. Es ist zudem ein einzelner Flake 4 gezeigt, der im THz-Bild von genau einem THz-Pixel (mit 5pa bezeichnet) vollständig überdeckt wird (die neun gestrichelten "Kacheln" zeigen die für diesen Pixels 5pa geometrisch registrierten optischen Pixel 6p). Die acht direkten Nachbarpixel 5p dieses genau einen THz-Pixels 5pa überdecken im THz-Bild den Flake 4 lediglich teilweise und sind mit 5pta bezeichnet. Einige weitere THz-Pixel 5p, die den Flake 4 im THz-Bild überhaupt nicht überdecken, sind mit 5pna bezeichnet. Nach der Registrierung lassen sich mit Hilfe der Auswertung aller optischen Pixel 6p im Bild 6 somit diejenigen (gröber auflösenden) THz-Pixel 5p identifizieren, die den Flake im THz-Bild 5 gesehen vollständig überdecken (Pixel 5pa), teilweise überdecken (Pixel 5pta) oder gar nicht überdecken (Pixel 5pna).

Gemäß Figuren 6 bis 9 dient die THz-Zeilenkamera 1b zur Materialidentifikation der Kunststoffflakes 4. Da diese 1b nur Bilder mit geringer Ortsauflösung liefert, wird zudem eine höherauflösende RGB-Kamera 7 eingesetzt. Mit dieser 7 kann die Position und Lage der einzelnen Kunststofflakes 4 genauer bestimmt werden und die Auswertung des THz-Bildes 5 kann sowohl vereinfacht und als auch beschleunigt werden (siehe Fig. 9 zur Fusion). Zudem ermöglicht die genauere Positionskenntnis der Flakes 4 im Bild 6 ein präziseres Ausblasen 13.

Die Fusion der RGB-Informationen (insbesondere: Bilder 6) und der THz-Informationen (insbesondere: Bilder 5) erfolgt durch die geometrische Registrierung der Bilder 5, 6 zueinander. Einem Pixel 5p der THz-Kamera 1 werden dadurch mehrere Pixel 6p der RGB-Kamera 7 zugeordnet. Über das RGB-Bild 6 können nun diejenigen THz-Pixel 5pa identifiziert werden, die Informationen über das durchstrahlte Kunstoffflake 4 beinhalten. THz-Pixel 5pna, die kein Flake 4 überdecken, werden von der weiteren Signalverarbeitung ausgeschlossen, wodurch Rechenzeit eingespart werden kann. Zudem können Mischpixel 5pta identifiziert werden, die neben Informationen über das Flake 4 auch Hintergrundsignale beinhalten. Diese können bei der weiteren Verarbeitung ebenfalls ausgeschlossen oder separat behandelt werden.

Die Spektren werden über eine Bandbreite von mehreren GHz (8 GHz bis 48 GHz, hier 16 GHz, vgl. Fig. 5) aufgenommen (Hyperspektrum, da mehrere hundert schmale Einzelspektren f_{E} ausgewertet werden).

Aufgrund der Übergänge von Luft und Kunststoff treten innerhalb der Flakes Mehrfachreflexionen auf. Abhängig von der Laufzeit des Signals im Material kommt es zu konstruktiven und destruktiven Überlagerungen des reflektierten Signals mit den Anteilen des Signales, die nicht reflektiert werden. Über den Frequenzbereich wechseln sich dabei konstruktive und destruktive Überlagerungen ab und bilden Rippel, die dem Gesamtverlauf des Signals überlagert sind. Der Frequenzabstand der Maxima und Minima ist dabei direkt abhängig von der Materialstärke und den Materialeigenschaften der Flakes und ist über den Frequenzverlauf nicht konstant. Hierdurch entsteht über den Frequenzbereich ein charakteristischer Fingerprint, der durch die hohe Anzahl von schmalen Einzelspektren f_{E} im Frequenzbereich abgetastet wird.

Innerhalb eines Frequenzbandes f_{B} geringer Breite kann die Permittivität als (nahezu) konstant angenommen werden. Hieraus lässt sich im hyperspektralen Ansatz eine grobe Schätzung für die Objektgeometrie ableiten. Diese Schätzung kann dazu verwendet werden, in einem anderen Frequenzband f_{B} geringer Breite die Permittivität zu berechnen. Dieses Vorgehen kann von beiden Frequenzbereichen ausgehend angewandt werden und kann zu einer konsistenten Schätzung der Geometrie der Objekte 4 und somit auch zu einer Abschätzung der frequenzabhängigen Permittivität (für jedes Frequenzband f_{B} geringer Breite) verwendet werden. Dazu können in "Classification of Plastics Using GMM-UBM on High-frequency Data" (von K. Hein, D. Stein, M. Stadtschnitzer, M. Demming, J. Küls in "Sensor Based Sorting 2014", p. 1-8) beschriebene Trainingsverfahren bzw. statistische Lernverfahren eingesetzt werden. Die dort beschriebenen Verfahren (oder vergleichbare Verfahren) sind zum Lernen beliebiger Absorptionskurven geeignet: Erfindungsgemäß können damit überwachte ("supervised") Lernverfahren eingesetzt werden, die in der Regel iterativ und numerisch latente Zusammenhänge erkennen und eine entsprechende Berechnungsvorschrift zur Klassifizierung verschiedener Materialien ermitteln.

Die hohe Anzahl an Abtastwerten (z.B. 4 x 128 = 512 Stück) im Frequenzraum erlaubt es, den charakteristischen Frequenzverlauf definierter Materialien zu erfassen und für die Auswertung zu verwenden.

Im in Figur 6 gezeigten Aufbau wird die Oberfläche der Flakes 4 nur einseitig optisch abgetastet (von der Seite 3o her). Man kennt somit nicht die Struktur der Unterseite der zu untersuchenden Flakes 4, da hier nicht gemessen wird.

### Zweites Ausführungsbeispiel:

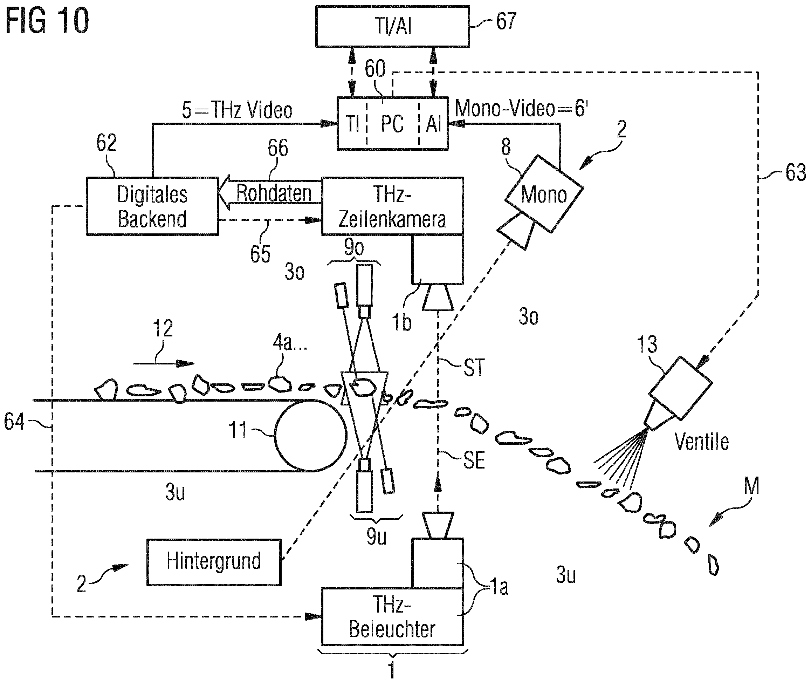

Figur 10 zeigt ein zweites Ausführungsbeispiel für eine erfindungsgemäße Vorrichtung zur Materialanalyse in Form einer Sortieranordnung. Der Aufbau folgt dabei grundsätzlich dem ersten Ausführungsbeispiel (siehe insbesondere Figur 6), so dass nachfolgend nur die Unterschiede beschrieben werden.

Anstelle einer RGB-Kamera 7 (Figur 6) wird hier eine monochromatische, mehrzeilige Kamera 8 im Aufnahmesystem 2 zum optischen Abtasten des Materialstroms M von der Oberseite 3o her eingesetzt. Anstelle von RGB-Farbbildern 6 (vgl. Figur 9) sind die so zu unterschiedlichen Aufnahmezeitpunkten gewonnenen optischen Aufnahmebilder somit monochromatische Bilder 6' bzw. es werden monochromatische Videos erzeugt, aus denen optische Abtastinformationen AI gewonnen werden.

Zudem umfasst das Aufnahmesystem 2 zusätzlich zwei Lasertriangulationssensoren 9u, 9o. Der Sensor 9o ist auf der Oberseite 3o zum optischen Abtasten des Materialstroms M von dieser Seite her positioniert. Der Sensor 9u ist auf der der Oberseite 3u gegenüberliegenden Seite des Materialstroms M (Unterseite 3u) zum optischen Abtasten des Materialstroms M von dieser Unterseite her positioniert. Somit wird der Materialstrom M von zwei gegenüberliegenden Seiten mittels Lasertriangulation abgetastet, um die Flakes 4a, ... dreidimensional (genauer: näherungsweise dreidimensional) vermessen zu können. Durch Fusion der beiden mittels der Sensoren 9o, 9u erfassten "Tiefenkarten" kann ein nahezu vollständiges dreidimensionales Oberflächenmodell der Flakes generiert werden, das Auskunft über die Durchstrahlungsdicke (Ausdehnung in Durchstrahlungsrichtung der Transmissionsanordnung 1) der THz-Messung gibt.

### Drittes Ausführungsbeispiel:

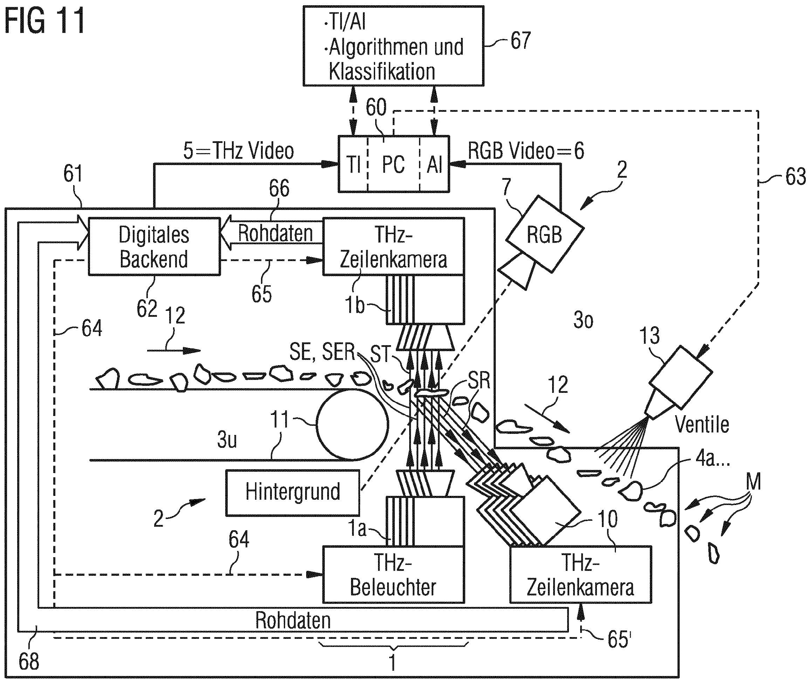

Figur 11 zeigt ein drittes Ausführungsbeispiel, das ebenfalls grundsätzlich wie das in den Figuren 6 bis 9 gezeigte ausgebildet ist, so dass wiederum nur die Unterschiede beschrieben werden. (Dieses Ausführungsbeispiel kann in einer Variante auch auf dem in Figur 10 gezeigten Ausführungsbeispiel basieren, d.h. es können, hier nicht gezeigt, zusätzlich noch die beiden optischen Lasertriangulationssensoren 9u, 9o vorgesehen sein. Dies hat dann den Vorteil, dass sowohl die THz-Abtastung durch die Transmissionsanordnung 1 sowie die Reflexionsanordnung 10, vgl. nachfolgend, als auch die optische Abtastung (nahezu) dreidimensional erfolgt.)

Wie Figur 11 zeigt, weist die THz-Abtastung zusätzlich zur Transmissionsanordnung 1 noch eine auf der Unterseite 3u positionierte THz-Zeilenkamera (die wie die THz-Kamera 1b aufgebaut ist) auf, mit der der Materialstrom M in einer Reflexionsanordnung 10 abtastbar ist. Neben denjenigen vom Beleuchter 1a auf den Materialstrom M eingestrahlten THz-Strahlungsanteilen (hier mit SE bezeichnet), die durch den Materialstrom abgeschwächt hindurch transmittiert werden und anschließend von der Kamera 1b erfasst werden (Strahlungsanteile ST), werden auch Anteile (hier mit SER gekennzeichnet) der vom Beleuchter 1a auf die Unterseite des Materialstroms M eingestrahlten THz-Strahlungsanteile an dieser Unterseite bzw. der Unterseite der Flakes 4a, 4b, ... reflektiert. Ein Teil dieser reflektierten Anteile (dieser Teil ist hier mit SR bezeichnet) wird in Richtung der Kamera der Reflexionsanordnung 10 reflektiert und kann somit von dieser Kamera erfasst werden.

Aus der Auswertung dieser reflektierten Strahlungsanteile SR lassen sich (analog wie beim Gewinn der Transmissionsinformationen TI) Reflexionsinformationen gewinnen, die im PC 60 im Speicher 67 mit geeigneten Software-Programmen computergestützt zusätzlich zu den Transmissionsinformationen TI ausgewertet werden können: Die mit der Kamera der Reflexionsanordnung 10 erfassten Rohdaten 68 werden dazu an das digitale Backend 62 übermittel. Aus diesen Rohdaten 68 kann ein weiteres, hier nicht gezeigtes THz-Video (ganz analog wie in Figur 9 für die Transmissionsinformationen TI gezeigt) generiert werden, aus dem sich diese Reflexionsinformationen, hier ebenfalls nicht gezeigt, ermitteln lassen. Die Steuerung der Kamera der Reflexionsanordnung 10 durch das Backend 62 ist durch 65' gekennzeichnet.

Mit der in Figur 11 gezeigten THz-Abtastung kann praktisch eine komplette dreidimensionale Struktur der Flakes 4a, ... erfasst werden, insbesondere können auch innenliegende Einschlüsse oder Luftlöcher der Flakes berücksichtigt werden. Dazu wird die zweite Kamera (Kamera der Reflexionsanordnung 10) auf der Senderseite (Seite des Beleuchters 1a) bzw. auf der Seite 3u angeordnet. Über die gemessene Phase kann beispielsweise mittels einer FFT (Fast-Fourier-Transformation) ein Entfernungsprofil erstellt werden. Jede Grenzschicht, beispielsweise an einem Einschluss in einem Flake, führt zu einer Reflexion im Zeitbereich, wodurch eine nahezu komplette dreidimensionale Information erstellt werden kann. Über das Zusammenfassen der einzelnen Frequenzbänder f_{B} kann eine höhere Entfernungsauflösung realisiert werden, wenn, wie im vorliegenden Fall (vgl. Figuren 7 und 8), die einzelnen Frequenzbänder f_{B} untereinander kohärent sind.

Der in Fig. 11 gezeigte Aufbau erlaubt (ebenso wie das erste und das zweite Ausführungsbeispiel) über geeignete Signalverarbeitungsmethoden wie z.B. Compressive Sensing das Zusammenfassen der Einzelbänder und somit ein Erhöhen der erreichbaren Entfernungsauflösung.

Bezüglich der Pixelauflösung in den THz-Bildern (vgl. z.B. die Pixel 5p der Bilder 5 in Fig. 9) gilt folgendes: Um die Kanalanzahl gering zu halten, können die Antennenelemente in einem relativ groben Raster angeordnet werden (z.B. Abstand benachbarter Antennenelemente 1 cm). Aufgrund des verwendeten Radarkonzeptes und der Antennenanordnung kann ein Sender jedoch mehrere Empfangskanäle beleuchten. Dies erlaubt die Generierung von zusätzlichen Pixeln, die zwischen den sich gegenüberstehenden Sende-/Empfangspaaren liegen. Ermöglicht wird dieses dadurch, dass aufgrund der Systemauslegung alle Empfänger gleichzeitig empfangen können. Somit bietet das System alle Voraussetzungen für einen MIMO Betrieb, vergleichbar einer tomographischen Bilderzeugung. (Bei einem tomographischen Ansatz wird in der Regel aber die Senderposition umgeschaltet, der Betrieb von mehreren Sendern ist dabei nicht möglich, da sich die Signale von verschiedenen Sendern in den Empfängern überlagern würden.) Da die Sender bei der vorliegenden Erfindung über eine separate Frequenzaufbereitung verfügen, können alle Sender gleichzeitig senden, wenn jeder Sender auf eine andere Frequenz eingestellt wird. Dieses reduziert die Messzeit und erlaubt den Einsatz des erfindungsgemäßen Verfahrens auch bei sehr hohen Bandgeschwindigkeiten der Sortieranlage.

## Patentansprüche

1. Vorrichtung zur Analyse von Materialien in einem Materialstrom (M)
mit einer Transmissionsanordnung (1) zum Bestrahlen des Materialstroms (M) mit elektromagnetischer Strahlung (SE) im Terahertz-Wellenlängenbereich, zum Erfassen der durch den Materialstrom (M) hindurch transmittierten THz-Strahlungsanteile (ST) und zum Auswerten dieser THz-Strahlungsanteile (ST),
wobei die Transmissionsanordnung (1) ausgebildet ist zum Erzeugen, Erfassen und Auswerten mehrerer unterschiedlicher THz-Frequenzbänder (f_{B}) geringer Bandbreite und zum Auswerten einer Vielzahl schmaler Einzelspektren (f_{E}) in jedem dieser THz-Frequenzbänder (f_{B}), wobei die mehreren unterschiedlichen THz-Frequenzbänder (f_{B}) sich nicht überlappende, voneinander beabstandete Frequenzbänder mit einer Bandbreite von jeweils zwischen 8 GHz und 48 GHz sind und wobei die mehreren unterschiedlichen THz-Frequenzbänder (f_{B}) von einem Basisband mittels Frequenzerweiterung abgeleitet werden,
und
mit einem Aufnahmesystem (2) zum optischen Abtasten des Materialstroms (M) von mindestens einer Seite (3o, 3u),
wobei die Vorrichtung ausgebildet ist zum Durchführen der Analyse auf Basis sowohl von mit der Transmissionsanordnung (1) durch deren Erfassen und/oder Auswerten gewonnenen Transmissionsinformationen (TI), als auch von mit dem Aufnahmesystem (2) durch dessen Abtasten und/oder durch ein Auswerten von Daten, die in Folge dieses Abtastens generiert wurden, gewonnenen Abtastinformationen (AI).

2. Vorrichtung nach dem vorhergehenden Anspruch,
***dadurch gekennzeichnet, dass***
das Erzeugen, Erfassen und Auswerten der mehreren THz-Frequenzbänder (f_{B}) geringer Bandbreite gemäß einem beliebigen oder mehrerer beliebiger der nachfolgenden Merkmale erfolgt oder gemäß aller nachfolgender Merkmale erfolgt:
• Lage jedes der THz-Frequenzbänder (f_{B}) im elektromagnetischen Spektrum zwischen 10 GHz und 10 THz, bevorzugt zwischen 30 GHz und 1 THz.
• Anzahl unterschiedlicher THz-Frequenzbänder (f_{B}) mindestens drei, bevorzugt mindestens vier, bevorzugt mindestens sechs, bevorzugt mindestens acht.

3. Vorrichtung nach einem der vorhergehenden Ansprüche,
***dadurch gekennzeichnet, dass***
das Auswerten der Vielzahl schmaler Einzelspektren (f_{E}) in jedem der THz-Frequenzbänder (f_{B}) gemäß einem beliebigen oder mehrerer beliebiger der nachfolgenden Merkmale erfolgt oder gemäß aller nachfolgender Merkmale erfolgt:
• Mindestens 32, bevorzugt mindestens 64, bevorzugt mindestens 128, bevorzugt mindestens 256 schmale Einzelspektren (f_{E}), als Vielzahl schmaler Einzelspektren (f_{E}) in jedem der THz-Frequenzbänder (f_{B}).
• Bandbreite b jedes der schmalen Einzelspektren (f_{E}) kleiner als 100 kHz, bevorzugt kleiner als 10 kHz, bevorzugt kleiner als 1 kHz, bevorzugt kleiner als 100 Hz, bevorzugt kleiner als 10 Hz.
• Verteilung der schmalen Einzelspektren (f_{E}) über jedes der THz-Frequenzbänder (f_{B}) gemäß eines gleichmäßigen Rasters.

4. Vorrichtung nach einem der vorhergehenden Ansprüche,
***dadurch gekennzeichnet, dass***
die mehreren THz-Frequenzbänder (f_{B}) untereinander kohärent sind .

5. Vorrichtung nach einem der vorhergehenden Ansprüche,
***dadurch gekennzeichnet, dass***
aus den Transmissionsinformationen (TI) Informationen über Phasenverschiebungen und/oder über Laufzeitverzögerungen der durch den Materialstrom (M) hindurch transmittierten THz-Strahlungsanteile (ST) in den Materialien des Materialstroms (M) bestimmbar sind, insbesondere berechenbar sind.

6. Vorrichtung nach einem der vorhergehenden Ansprüche,
***dadurch gekennzeichnet, dass***
mit oder aus den Abtastinformationen (AI) Informationen gemäß einem beliebigen oder mehrerer beliebiger der nachfolgenden Merkmale oder gemäß aller nachfolgender Merkmale bestimmbar sind, insbesondere berechenbar sind:
• Informationen bezüglich der Oberfläche, insbesondere bezüglich deren Geometrie und/oder Form, von Materialien im Materialstrom (M),
• Informationen bezüglich der Materialstärke von Materialien im Materialstrom (M),
und/oder
• Informationen bezüglich der Dicke von Materialien im Materialstrom (M), gesehen in Einstrahlrichtung der elektromagnetischen Strahlung (SE) der Transmissionsanordnung (1) im Terahertz-Wellenlängenbereich auf den Materialstrom (M).

7. Vorrichtung nach einem der vorhergehenden Ansprüche, bevorzugt nach den beiden vorhergehenden Ansprüchen,
***dadurch gekennzeichnet, dass***
aus den Transmissionsinformationen (TI) und den Abtastinformationen (AI), insbesondere aus den gemäß der beiden vorhergehenden Ansprüchen gewonnenen Informationen, Permittivitäten oder permittivitätsbezogene Informationen von Materialien im Materialstrom (M) bestimmbar sind, insbesondere berechenbar sind.

8. Vorrichtung nach dem vorhergehenden Anspruch,
***dadurch gekennzeichnet, dass***
(eine) Permittivität(en) und/oder (eine) permittivitätsbezogene Information(en) gemäß einem beliebigen oder mehrerer beliebiger der nachfolgenden Merkmale oder gemäß aller nachfolgender Merkmale bestimmbar sind, insbesondere berechenbar sind:
• Eine/die Permittivität einer einzelnen Materialprobe (4, 4a, 4b, ...), insbesondere eines einzelnen Kunststoffabfallteils, im Materialstrom,
• Permittivitäten der Materialien im Materialstrom (M), insbesondere eine/die Permittivität(en) einer einzelnen Materialprobe (4, 4a, 4b, ...) im Materialstrom (M), in einem, in mehreren oder in allen der THz-Frequenzbänder (f_{B}) geringer Bandbreite,
und/oder,
• insbesondere aus der/den so bestimmten Permittivität(en) in mehreren oder in allen der THz-Frequenzbänder (f_{B}) geringer Bandbreite, (ein) Frequenzverlauf/Frequenzverläufe der Permittivität(en) von Materialien im Materialstrom (M), insbesondere von einer einzelnen Materialprobe (4, 4a, 4b, ...) im Materialstrom (M).

9. Vorrichtung nach einem der beiden vorhergehenden Ansprüche, ***dadurch gekennzeichnet, dass***
(eine) solche Permittivität(en) und/oder (eine) solche permittivitätsbezogene(n) Information(en), insbesondere (ein) solche(r) Frequenzverlauf/Frequenzverläufe der Permittivität(en), in der Analyse der Materialien als Klassifizierungsmerkmal(e) für die Materialien im Materialstrom (M) dient/dienen.

10. Vorrichtung nach einem der drei vorhergehenden Ansprüche,
***dadurch gekennzeichnet, dass***
für verschiedene Materialien aus (einem) Materialstrom/Materialströmen (M) Permittivitäten oder permittivitätsbezogene Informationen bestimmbar sind, dass die so bestimmten Permittivitäten oder permittivitätsbezogenen Informationen zusammen mit Informationen zur Identifikation der verschiedenen Materialien in einem Datenspeicher der Vorrichtung abspeicherbar sind, und dass zur Analyse, insbesondere zur Identifikation, von Materialien in einem weiteren Materialstrom (M) Permittivitäten oder permittivitätsbezogene Informationen, die für die Materialien des weiteren Materialstroms (M) bestimmt wurden, mit den abgespeicherten Permittivitäten oder permittivitätsbezogenen Informationen vergleichbar sind.

11. Vorrichtung nach einem der vorhergehenden Ansprüche,
***dadurch gekennzeichnet, dass***
die Transmissionsinformationen (TI) und die Abtastinformationen (AI) jeweils ortsaufgelöst gewinnbar sind, dass die so gewonnenen Transmissionsbilder (5) der Transmissionsanordnung (1) einerseits und die so gewonnenen Aufnahmebilder (6) des Aufnahmesystems (2) andererseits zueinander geometrisch registrierbar sind, dass auf Basis von Pixeln (6p) in den Aufnahmebildern (6) feststellbar ist, welche Pixel (5p) der Transmissionsbilder (5) tatsächlich Materialien im Materialstrom (M) abbilden (5pa) und welche nicht (5pna), und dass bei einer durch die Vorrichtung zum Zweck der Analyse der Materialien vorgenommenen Datenverarbeitung der Transmissionsinformationen (TI) und/oder der Transmissionsbilder (5) nur diejenigen Pixel (5pa) der Transmissionsbilder (5), die tatsächlich Materialien im Materialstrom (M) abbilden, nicht aber diejenigen Pixel (5pna), die keine Materialien im Materialstrom (M) abbilden, Berücksichtigung finden.

12. Vorrichtung nach einem der vorhergehenden Ansprüche,
***dadurch gekennzeichnet, dass***
der Materialstrom (M) durch das Aufnahmesystem (2) von lediglich genau einer Seite (3o) abtastbar ist,
wobei bevorzugt das Aufnahmesystem (2) mindestens eines der nachfolgenden Geräte zum optischen Abtasten des Materialstroms (M) aufweist:
• eine orts- und zeitauflösende RGB-Kamera (7),
• eine orts- und zeitauflösende monochromatische Kamera (8),
oder
• einen Laserlinienscanner.

13. Vorrichtung nach einem der vorhergehenden Ansprüche,
***dadurch gekennzeichnet, dass***
der Materialstrom (M) durch das Aufnahmesystem (2) von zwei gegenüberliegenden Seiten (3o, 3u) abtastbar ist,
wobei bevorzugt das Aufnahmesystem (2) zum optischen Abtasten des Materialstroms (M) neben einer orts- und zeitauflösenden RGB-Kamera (7) oder monochromatischen Kamera (8) auf jeder der beiden gegenüberliegenden Seiten (3o, 3u) jeweils einen Triangulationssensor (9o, 9u), bevorzugt einen Laser-Triangulationssensor, aufweist.

14. Vorrichtung nach einem der vorhergehenden Ansprüche,
***dadurch gekennzeichnet, dass***
die Vorrichtung zusätzlich zur Transmissionsanordnung (1) eine Reflexionsanordnung (10) zum Bestrahlen des Materialstroms (M) mit elektromagnetischer Strahlung (SER) im Terahertz-Wellenlängenbereich, zum Erfassen der am Materialstrom (M) reflektierten THz-Strahlungsanteile (SR) und zum Auswerten letzterer THz-Strahlungsanteile aufweist.

15. Sortieranordnung,
***gekennzeichnet durch***
eine Vorrichtung nach einem der vorhergehenden Ansprüche,
ein Fördermittel (11), insbesondere ein Förderband, zum Transportieren des Materialstroms (M) durch den Bestrahlungsbereich der Transmissionsanordnung (1) und den Abtastbereich des Aufnahmesystems (2) hindurch, und
eine in Transportrichtung (12) gesehen hinter der Transmissionsanordnung (1) sowie hinter dem Aufnahmesystem (2) angeordnete Aussortiereinrichtung (13), insbesondere eine Ausblaseinrichtung.

## Claims

1. Device for analysing materials in a material stream (M),
comprising a transmission assembly (1) for irradiating the material stream (M) with electromagnetic radiation (SE) in the terahertz wavelength range, for detecting the THz radiation fractions (ST) transmitted through the material stream (M) and for evaluating said THz radiation fractions (ST),
wherein the transmission assembly (1) is configured to generate, detect and evaluate a plurality of different low-bandwidth THz frequency bands (f_{B}) and to evaluate a plurality of narrow individual spectra (f_{E}) in each of said THz frequency bands (f_{B}), wherein the plurality of different THz frequency bands (f_{B}) are non-overlapping, spaced-apart frequency bands each having a bandwidth of between 8 GHz and 48 GHz and wherein the plurality of different THz frequency bands (f_{B}) are derived from a baseband by means of frequency extension,
and
comprising a recording system (2) for optically scanning the material stream (M) from at least one side (3o, 3u),
wherein the device is configured to perform the analysis on the basis of transmission information (TI) obtained by the detection and/or evaluation thereof by the transmission assembly (1) and on the basis of scanning information (AI) obtained by the scanning thereof by the recording system (2) and/or by evaluation of data generated as a result of said scanning.

2. Device according to the preceding claim,
**characterised in that**
the plurality of low-bandwidth THz frequency bands (f_{B}) are generated, detected and evaluated in accordance with any one or any number of the following features or in accordance with all the following features:
• location of each of the THz frequency bands (f_{B}) in the electromagnetic spectrum between 10 GHz and 10 THz, preferably between 30 GHz and 1 THz,
• number of different THz frequency bands (f_{B}) being at least three, preferably at least four, preferably at least six, preferably at least eight.

3. Device according to any of the preceding claims,
**characterised in that**
the plurality of narrow individual spectra (f_{E}) in each of the THz frequency bands (f_{B}) are evaluated in accordance with any one or any number of the following features or in accordance with all the following features:
• at least 32, preferably at least 64, preferably at least 128, preferably at least 256 narrow individual spectra (f_{E}) as the plurality of narrow individual spectra (f_{E}) in each of the THz frequency bands (f_{B}),
• bandwidth b of each of the narrow individual spectra (f_{E}) less than 100 kHz, preferably less than 10 kHz, preferably less than 1 kHz, preferably less than 100 Hz, preferably less than 10 Hz,
• distribution of the narrow individual spectra (f_{E}) over each of the THz frequency bands (f_{B}) according to a uniform grid.

4. Device according to any of the preceding claims,
**characterised in that**
the plurality of THz frequency bands (f_{B}) are coherent with one another.

5. Device according to any of the preceding claims,
**characterised in that**
from the transmission information (TI) is it possible to determine, in particular compute, information on phase shifts and/or on time-of-flight delays of the THz radiation fractions (ST) transmitted through the material stream (M) in the materials of the material stream (M).

6. Device according to any of the preceding claims,
**characterised in that**
either using or from the scanning information (Al), it is possible to determine, in particular compute, information in accordance with any one or any number of the following features or in accordance with all the following features:
• information on the surface, in particular as regards the geometry and/or shape thereof, of materials in the material stream (M),
• information on the material thickness of materials in the material stream (M), and/or
• information on the thickness of materials in the material stream (M), as viewed in the direction of irradiation of the electromagnetic radiation (SE) of the transmission assembly (1) in the terahertz wavelength range onto the material stream (M).

7. Device according to any of the preceding claims, preferably according to the two preceding claims,
**characterised in that**
from the transmission information (TI) and the scanning information (AI), in particular from the information obtained in accordance with the two preceding claims, it is possible to determine, in particular compute, permittivities or permittivity-related information of materials in the material stream (M).

8. Device according to the preceding claim,
**characterised in that**
it is possible to determine, in particular compute, one or more permittivities and/or one or more pieces of permittivity-related information in accordance with any one or any number of the following features or in accordance with all the following features:
• a/the permittivity of a single material sample (4, 4a, 4b, ...), in particular of a single waste plastics part, in the material stream,
• permittivities of the materials in the material stream (M), in particular a/the permittivity/permittivities of a single material sample (4, 4a, 4b, ...) in the material stream (M), in one, a plurality or all of the low-bandwidth THz frequency bands (f_{B}),
and/or
• in particular from the permittivity/permittivities thus determined in a plurality or all of the low-bandwidth THz frequency bands (f_{B}), one or more frequency curves of the permittivity/permittivities of materials in the material stream (M), in particular of a single material sample (4, 4a, 4b, ...) in the material stream (M).

9. Device according to any of the two preceding claims,
**characterised in that**
one or more such permittivities and/or one or more such pieces of permittivity-related information, in particular one or more such frequency curves of the permittivity/permittivities, is/are used as the classification feature(s) for the materials in the material stream (M) during the analysis of the materials.

10. Device according to any of the three preceding claims,
**characterised in that**
for various materials from one or more material streams (M), permittivities or permittivity-related information can be determined such that the permittivities or permittivity-related information thus determined can be stored, together with information for identifying the various materials, in a data memory of the device, and such that in order to analyse, in particular identify, materials in a further material stream (M), permittivities or permittivity-related information determined for the materials of the further material stream (M) can be compared with the stored permittivities or permittivity-related information.

11. Device according to any of the preceding claims,
**characterised in that**
the transmission information (TI) and the scanning information (AI) can each be obtained in a space-resolved manner, **in that** the transmission images (5) of the transmission assembly (1) thus obtained, on the one hand, and the recording images (6) of the recording system (2) thus obtained, on the other hand, can be registered geometrically with respect to one another, **in that**, on the basis of pixels (6p) in the recording images (6), it is possible to ascertain which pixels (5p) in the transmission images (5) actually depict (5pa) materials in the material stream (M) and which do not (5pna), and **in that**, during data processing of the transmission information (TI) and/or the transmission images (5) carried out by the device for the purpose of analysing the materials, only those pixels (5pa) in the transmission images (5) that actually depict materials in the material stream (M) are considered, but not those pixels (5pna) that do not depict any materials in the material stream (M).

12. Device according to any of the preceding claims,
**characterised in that**
the material stream (M) can be scanned by the recording system (2) from precisely one side (3o) only,
the recording system (2) preferably having at least one of the following instruments for optically scanning the material stream (M):
• a space- and time-resolved RGB camera (7),
• a space- and time-resolved monochromatic camera (8),
or
• a laser line scanner.

13. Device according to any of the preceding claims,
**characterised in that**
the material stream (M) can be scanned by the recording system (2) from two opposite sides (3o, 3u),
the recording system (2) for optically scanning the material stream (M) preferably having, in addition to a space- and time-resolved RGB camera (7) or monochromatic camera (8), a triangulation sensor (9o, 9u), preferably a laser triangulation sensor, on each of the two opposite sides (3o, 3u).

14. Device according to any of the preceding claims,
**characterised in that**
in addition to the transmission assembly (1), the device additionally comprises a reflection assembly (10) for irradiating the material stream (M) with electromagnetic radiation (SER) in the terahertz wavelength range, for detecting the THz radiation fractions (SR) reflected on the material stream (M) and for evaluating these latter THz radiation fractions.

15. Sorting assembly,
**characterised by**
a device according to any of the preceding claims,
a conveying means (11), in particular a conveyor belt, for transporting the material stream (M) through the irradiation region of the transmission assembly (1) and the scanning region of the recording system (2), and
a sorting-out apparatus (13), in particular a blow-out apparatus, arranged downstream of the transmission assembly (1) and downstream of the recording system (2) when viewed in the transport direction (12).

## Revendications

1. Dispositif pour l'analyse de matériaux dans un flux de matériaux (M),
avec un dispositif de transmission (1) pour l'irradiation du flux de matériaux (M) avec un rayonnement électromagnétique (SE) dans le domaine de longueurs d'onde du terahertz, pour la mesure, des parts de rayonnement THz (ST) transmises par le flux de matériaux (M) et pour l'analyse de ces parts de rayonnement THz (ST),
dans lequel le dispositif de transmission (1) est conçu pour la production, la mesure et l'analyse de plusieurs bandes de fréquences THz (f_{B}) différentes de faible largeur de bande et pour l'analyse d'une pluralité de spectres individuels étroits (f_{E}) dans chacune de ces bandes de fréquences THz (f_{B}), dans lequel les plusieurs bandes de fréquences THz (f_{B}) différentes sont des bandes de fréquences ne se superposant pas, distantes entre elles, avec une largeur de bande entre 8 GHz et 48 GHz et dans lequel les plusieurs bandes de fréquences THz (f_{B}) différentes sont dérivées d'une bande de base au moyen d'un élargissement de fréquence,
et
avec un système de prise de vues (2) pour le balayage optique du flux de matériaux (M) à partir d'au moins un côté (3o, 3u),
dans lequel le dispositif est conçu pour la réalisation de l'analyse sur la base aussi bien d'informations de transmission (TI) obtenues avec le dispositif de transmission (1), par leur mesure et/ou analyse, que d'informations de balayage (AI) obtenues avec le système de prise de vues (2), par leur balayage et/ou par une analyse des données qui ont été générées à la suite de ce balayage.

2. Dispositif selon la revendication précédente,
**caractérisé en ce que**
la production, la mesure et l'analyse des plusieurs bandes de fréquences THz (f_{B}) de faible largeur de bande a lieu en fonction d'une ou plusieurs caractéristiques quelconques parmi les caractéristiques suivantes ou en fonction de toutes les caractéristiques suivantes :
• position de chacune des bandes de fréquences THz (f_{B}) dans le spectre électromagnétique entre 10 GHz et 10 THz, de préférence entre 30 GHz et 1 THz,
• nombre des différentes bandes de fréquence THz (f_{B}) d'au moins trois, de préférence d'au moins quatre, de préférence d'au moins six, de préférence d'au moins huit.

3. Dispositif selon l'une des revendications précédentes,
**caractérisé en ce que**
l'analyse de la pluralité de spectres individuels étroits (f_{E}) dans chacune des bandes de fréquence THz (f_{B}) a lieu en fonction d'une ou plusieurs caractéristiques quelconques parmi les caractéristiques suivantes ou en fonction de toutes les caractéristiques suivantes :
• au moins 32, de préférence au moins 64, de préférence au moins 128, de préférence au moins 256 spectres individuels étroits (f_{E}), en tant que pluralité de spectres individuels étroits (f_{E}) dans chacune des bandes de fréquence THz (f_{B})
• largeur de bande b de chacun des spectres individuels étroits (f_{E}) inférieure à 100 kHz, de préférence inférieure à 10 kHz, de préférence inférieure à 1 kHz, de préférence inférieure à 100 Hz, de préférence inférieure à 10 Hz
• répartition des spectres individuels étroits (f_{E}) sur chacune des bandes de fréquence THz (f_{B}) selon une trame régulière.

4. Dispositif selon l'une des revendications précédentes,
**caractérisé en ce que**
les plusieurs bandes de fréquence THz (f_{B}) sont cohérentes entre elles.

5. Dispositif selon l'une des revendications précédentes,
**caractérisé en ce que**
à partir des informations de transmission (TI), peuvent être déterminées, plus particulièrement calculés, des informations concernant des décalages de fréquences et/ou des retards de propagation des parts de rayonnement THz (ST) transmises à travers le flux de matériaux (M) dans les matériaux du flux de matériaux (M).

6. Dispositif selon l'une des revendications précédentes,
**caractérisé en ce que**
avec ou à partir des informations de balayage (AI), peuvent être déterminées, plus particulièrement calculés, des informations concernant une caractéristique quelconque ou plusieurs caractéristiques quelconques suivantes ou concernant toutes les caractéristiques suivantes :
• informations concernant la surface, plus particulièrement concernant sa géométrie et/ou forme, de matériaux dans le flux de matériaux (M),
• informations concernant la résistance des matériaux dans le flux de matériaux (M), et/ou
• informations concernant l'épaisseur des matériaux dans le flux de matériaux (M), vue dans la direction d'irradiation du rayonnement électromagnétique (SE) du dispositif de transmission (1) dans le domaine de longueurs d'ondes du terahertz sur le flux de matériaux (M).

7. Dispositif selon l'une des revendications précédentes, de préférence selon les deux revendications précédentes,
**caractérisé en ce que**
à partir des informations de transmission (TI) et des informations de balayage (AI), plus particulièrement à partir des informations obtenues selon les deux revendications précédentes, des permittivités et ou des informations concernant la permittivité de matériaux dans le flux de matériaux (M) peuvent être déterminées, plus particulièrement calculées.

8. Dispositif selon la revendication précédente,
**caractérisé en ce que**
une ou des permittivité(s) et/ou une ou des information(s) concernant la permittivité peuvent être déterminées, plus particulièrement calculées, selon une caractéristique quelconque ou plusieurs caractéristiques quelconques suivantes ou selon toutes les caractéristiques suivantes :
• une/la permittivité d'un seul échantillon de matériau (4, 4a, 4b...), plus particulièrement d'une seule partie de déchet de matière plastique, dans le flux de matériaux,
• permittivité des matériaux dans le flux de matériaux (M), plus particulièrement une/les permittivité(s) d'un seul échantillon de matériau (4, 4a, 4b...) dans le flux de matériaux (M), dans une, dans plusieurs ou dans toutes les bandes de fréquences THz (f_{B}) de faible largeur de bande,
et/ou
• plus particulièrement à partir de la / des permittivité(s) ainsi déterminée(s) dans plusieurs ou dans toutes les bandes de fréquences THz (f_{B}) de faible largeur de bande, un tracé de fréquence / des tracés de fréquence de la ou des permittivité(s) de matériaux dans le flux de matériaux (M), plus particulièrement d'un seul échantillon de matériau (4, 4a, 4b...) dans le flux de matériaux.

9. Dispositif selon l'une des deux revendications précédentes,
**caractérisé en ce que**
cette/ces permittivité(s) et/ou cette/ces information(s) concernant la/les permittivité(s), plus particulièrement ce/ces tracé(s) de fréquence de la ou des permittivité(s), sert/servent, dans l'analyse des matériaux, de caractéristique(s) de classification pour les matériaux dans le flux de matériaux (M).

10. Dispositif selon l'une des trois revendications précédentes,
**caractérisé en ce que**
pour différents matériaux provenant d'un flux de matériaux / de flux de matériaux (M), des permittivités ou des informations concernant la permittivité peuvent être déterminées, **en ce que** les permittivités ainsi déterminées ou les informations concernant la permittivité ainsi déterminées peuvent être enregistrées conjointement avec des informations pour l'identification des différents matériaux, dans une mémoire de données du dispositif et **en ce que**, pour l'analyse, plus particulièrement pour l'identification, des matériaux dans un autre flux de matériaux (M), les permittivités ou les informations concernant la permittivité qui ont été déterminées pour les matériaux de l'autre flux de matériaux (M), peuvent être comparées avec les permittivités ou informations concernant la permittivité enregistrées.

11. Dispositif selon l'une des revendications précédentes,
**caractérisé en ce que**
les informations de transmission (TI) et les informations de balayage (AI) peuvent être obtenues avec une résolution spatiale, **en ce que** les images de transmission (5) du dispositif de transmission (1) ainsi obtenues d'une part et les prises de vues (6) du système de prise de vues (2) d'autre part puissent être enregistrées de manière géométrique entre elles, **en ce que**, sur la base de pixels (6p) dans les images d'enregistrement (6), il est possible de détecter quels pixels (5p) des images de transmission (5) représentent réellement des matériaux dans le flux de matériaux (M) (5pa) et lesquels non (5pna) et **en ce que**, lors d'un traitement des informations de transmission (TI) et/ou des images de transmission (5), effectué par le dispositif pour l'analyse des matériaux, seuls les pixels (5pa) des images de transmission (5) qui représentent réellement des matériaux dans le flux de matériaux (M) sont pris en compte, mais pas les pixels (5pna) qui ne représentent aucun matériau dans le flux de matériaux (M).

12. Dispositif selon l'une des revendications précédentes,
**caractérisé en ce que**
le flux de matériaux (M) peut être balayé par le système de prise de vues (2) sur exactement un côté (3o),
dans lequel, de préférence, le système de prise de vues (2) comprend au moins un des appareils suivants pour le balayage optique du flux de matériaux (M) :
• une caméra RGB (7) à résolution spatiale et temporelle,
• une caméra monochromatique (8) à résolution spatiale et temporelle,
ou
• un scanner laser linéaire.

13. Dispositif selon l'une des revendications précédentes,
**caractérisé en ce que**
le flux de matériaux (M) peut être balayé par le système de prises de vues (2) à partir de deux côtés opposés (3o, 3u),
dans lequel, de préférence, le système de prises de vues (2) comprend, pour le balayage optique du flux de matériaux (M), en plus d'une caméra RGB (7) à résolution spatiale et temporelle, ou d'une caméra monochromatique (8) à résolution spatiale et temporelle, sur chacun des deux côtés opposés (3o, 3u), un capteur de triangulation (9o, 9u), de préférence un capteur de triangulation à laser.

14. Dispositif selon l'une des revendications précédentes,
**caractérisé en ce que**
le dispositif comprend, en plus du dispositif de transmission (1), un dispositif de réflexion (10) pour l'irradiation du flux de matériaux (M) avec un rayonnement électromagnétique (SER) dans le domaine de longueurs d'ondes du térahertz, pour la mesure des parts de rayonnement (SR) réfléchies par le flux de matériaux (M) et pour l'analyse de ces parts de rayonnement (SR).

15. Dispositif de tri,
**caractérisé par**
un dispositif selon l'une des revendications précédentes,
un moyen de convoyage (11), plus particulièrement un convoyeur à bande, pour le transport du flux de matériaux (M) à travers la zone d'irradiation du dispositif de transmission (1) et de la zone de balayage du système de prise de vues (2) et
un dispositif de tri (13), disposé, vu dans la direction de transport (12), derrière le dispositif de transmission (1), ainsi qu'un dispositif de tri (13), plus particulièrement un dispositif de soufflage, disposé derrière le système de prise de vues (2).
